# EUROPEAN PATENT APPLICATION

(11) **EP 4 275 488 A1**
(43) Date of publication of application: **15.11.2023**
(21) Application number: 23165905.3
(22) Date of filing: 31.03.2023
(51) Int. Cl.: A01M 7/00

(54) **SPRAY MACHINE CONTROL METHOD, SPRAY MACHINE CONTROL PROGRAM, AND SPRAY MACHINE**

(30) Priority: 27.04.2022 JP 2022072970
(71) Applicant: Yanmar Holdings Co., Ltd., Osaka-shi, Osaka (JP)
(72) Inventor: UENO, So, Okayama-shi (JP)
(74) Representative: Dennemeyer & Associates S.A.

(57) **Abstract**

[Problem] To provide, by a relatively simple configuration, a spray machine control method, a spray machine control program, and a spray machine which are capable of acquiring a spray rate of a spray matter.

[Solution] A control method of a spray machine provided with a machine body capable of running and multiple spray nozzles 41 supported to the machine body and classified into multiple systems U1, U2, U3 for spraying a spray matter. The method includes: acquiring flowrate information on a flowrate of the spray matter in at least one of a supply route 401 of the spray matter from a tank 64 to the multiple spray nozzles 41 and a return route 402 of the spray matter from the supply route 401 to the tank 64. The control method further includes: acquiring spray rate information on a spray rate of the spray matter, based on the flowrate information and based on an open and close state of the multiple spray nozzles 41 for each of the multiple systems U1, U2, U3.

## Description

### TECHNICAL FIELD

The present invention relates to a control method for a spray machine capable of spraying a spray matter while running, a spray machine control program, and the spray machine.

### BACKGROUND ART

As a related technology, there is known a spray machine (agricultural vehicle) provided with a run unit (crawler) including a pair of crawlers arranged in the right and left direction, a machine body (left vehicle body and right vehicle body), an engine, and a spray nozzle (chemical jet unit) (see, for example, Patent Document 1). In the spray machine according to the related art, the pair of crawlers of the run unit runs so that a plant, which is a spray target, is sandwiched therebetween in the right and left direction. The left vehicle body in the machine body is supported mainly by the left crawler. The right vehicle body in the machine body is supported mainly by the right crawler. The engine is placed on the left vehicle body side.

In the spray machine according to the related art, the spray nozzle is provided on each of the right and left vehicle bodies. Each of the spray nozzle sprays a chemical on both the right and left sides. As a result, the spray machine according to the related art can simultaneously spray the chemical on a plant passing between the right and left pair of crawlers, a plant positioned on the left side of the spray machine, and a plant positioned on the right side of the spray machine. This spray machine is capable of spraying the chemical on the plant while automatically running (autonomous running) based on the current position and autonomous run route.

### PRIOR ART DOCUMENT

### PATENT DOCUMENT

Patent Document 1: Japanese Unexamined Patent Application Publication No. 2020-152285

### SUMMARY OF INVENTION

### TECHNICAL PROBLEM

For controlling the spray matter (chemical)'s spray rates by the spray machine, the above related technology is required for acquiring the spray matter's spray rate by a relatively simple configuration.

An object of the present invention is to provide, by a relatively simple configuration, a spray machine control method, a spray machine control program, and a spray machine which are capable of acquiring a spray rate of a spray matter.

### SOLUTION TO PROBLEM

A control method of a spray machine according to one aspect of the present invention is provided with a machine body capable of running and multiple spray nozzles supported to the machine body and classified into multiple systems for spraying a spray matter. The method includes: acquiring flowrate information on a flowrate of the spray matter in at least one of a supply route of the spray matter from a tank to the multiple spray nozzles and a return route of the spray matter from the supply route to the tank. The control method further includes: acquiring spray rate information on a spray rate of the spray matter, based on the flowrate information and based on an open and close state of the multiple spray nozzles for each of the multiple systems.

A spray machine control program according to one aspect of the present invention is for causing one or more processors to execute the control method of the spray machine.

A spray machine according to one aspect of the present invention includes: a machine body capable of running; multiple spray nozzles; an acquisition process unit; and a calculation process unit. The multiple spray nozzles are supported to the machine body and classified into multiple systems for spraying a spray matter. The acquisition process unit acquires flowrate information on a flowrate of the spray matter in at least one of a supply route of the spray matter from a tank to the multiple spray nozzles and a return route of the spray matter from the supply route to the tank. The calculation process unit acquires spray rate information on a spray rate of the spray matter, based on the flowrate information and based on an open and close state of the multiple spray nozzles for each of the multiple systems.

### ADVANTAGEOUS EFFECTS OF INVENTION

The present invention can provide, by a relatively simple configuration, a spray machine control method, a spray machine control program, and a spray machine which are capable of acquiring the spray matter's spray rate.

### BRIEF DESCRIPTION OF DRAWINGS

Fig. 1 is an external view of a spray machine according to a first embodiment when viewed from the front left side.
Fig. 2 is an external view of a back face of the spray machine according to the first embodiment when viewed from the back side.
Fig. 3 shows an example of a crop row for which the spray machine according to the first embodiment is used.
Fig. 4 is a schematic view showing an overall configuration of an automatic run system using the spray machine according to the first embodiment.
Fig. 5 is a schematic block diagram showing the configuration of the spray machine according to the first embodiment.
Fig. 6 is an external view of the left lateral side of the spray machine according to the first embodiment when viewed from the left side.
Fig. 7 is an external view of the right lateral side of the spray machine according to the first embodiment when viewed from the right side.
Fig. 8 is an external view of an upper side of the spray machine according to the first embodiment when viewed from above.
Fig. 9 is an external view of a back side of the spray machine according to the first embodiment when viewed from the back side.
Fig. 10 is a schematic view showing the spray machine according to the first embodiment when viewed from diagonally behind.
Fig. 11 is an illustration schematically showing the configuration of a spray device of the spray machine according to the first embodiment.
Fig. 12 is an illustration showing an example of a target route for automatic run of the spray machine according to the first embodiment.
Fig. 13 is a table showing an example of factors used for the control method of the spray machine according to the first embodiment.
Fig. 14 is a flowchart showing an example of a calculation process that is of the control method according to the first embodiment and that is for acquiring especially spray rate information.
Fig. 15 is an illustration showing an example of a work map used for the control method according to the first embodiment.
Fig. 16 is schematic view showing an example of a display screen displayed in the control method according to the first embodiment.
Fig. 17 is an illustration schematically showing the configuration of the spray device of the spray machine according to a second embodiment.
Fig. 18 is a flowchart showing an example of a process that is of the control method according to the second embodiment and that is related to a calculation process for acquiring especially spray rate information.

### DESCRIPTION OF EMBODIMENTS

Embodiments of the present invention will be described below with reference to the accompanying drawings. The following embodiments are each an embodied example of the present invention, and are not intended to limit the technical scope of the present invention.

### (First Embodiment)

### [1] Overall Configuration

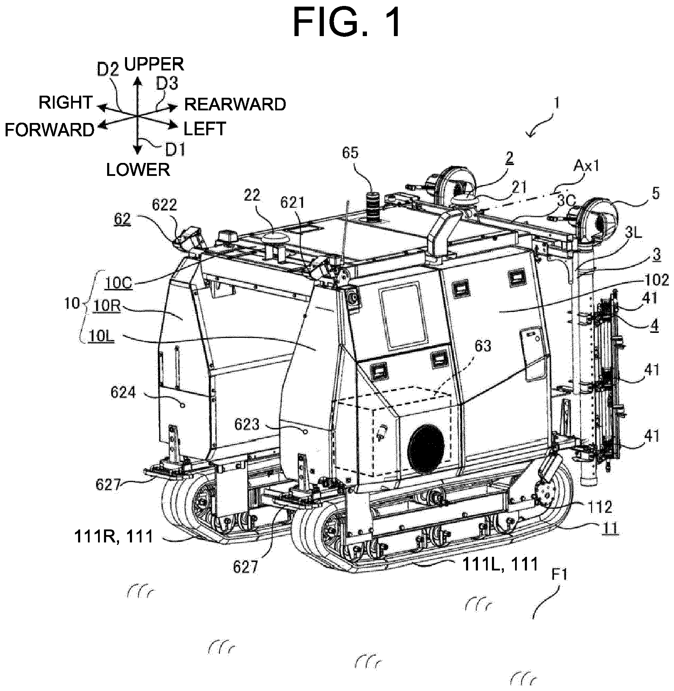

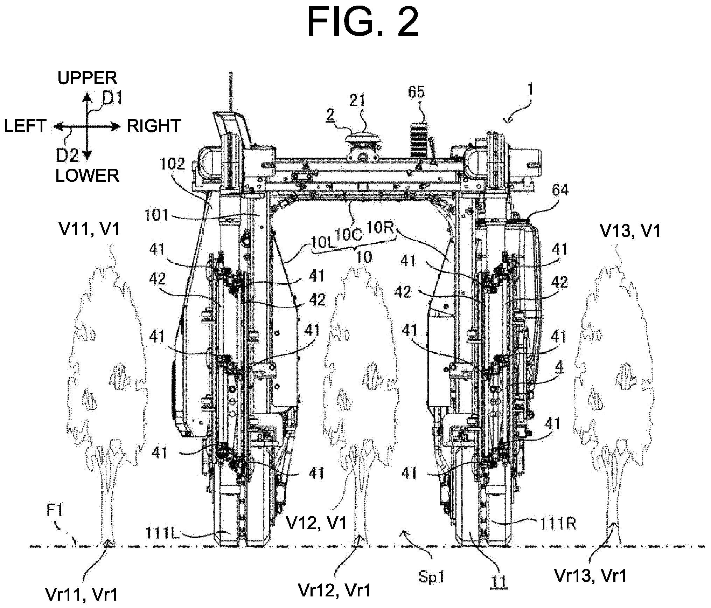

First, the overall configuration of a spray machine 1 according to the present embodiment will be described with reference to Figs. 1 to 4. In the present embodiment; to a crop V1 (see Fig. 2) being grown in a farm field F1, the spray machine 1, performs spray work of spraying a spray matter such as chemical solution, water, fertilizer and the like, for example. This spray machine 1 is an example of a "spray machine" that performs various types of work in a work target area such as the farm field F1.

That is, the spray machine 1 is a work machine that can perform, as work, spray work of spraying the spray matter such as chemical solution, water, fertilizer and the like. The "work machine" referred to in the present disclosure includes, for example, work vehicles such as tractors, rice planters, spray machines, seeders, transplanters, and combine harvesters, in addition to the spray machine. That is, the work machines include the work vehicle. The work machine is not limited to a "vehicle" but may be, for example, a flying work vehicle such as a drone, a multi-copter or the like for spraying chemical solution, water, fertilizer or the like. Further, the "work machine" referred to in the present disclosure is not limited to the agricultural machine (farm machinery), but can also be, for example, a construction machine (construction equipment) and the like.

The "farm field" referred to in the present disclosure is an example of the work target area where the spray machine 1, which is the work machine, performs various types of work such as spraying, for example, while moving, and includes orchards, pastures, rice fields, and fields where agricultural products are grown. In this case, the crop V1 grown in the farm field F1 is an agricultural product. Further, when garden plants are grown in the plant field, the plant field becomes the farm field F1, and when trees to be used as timber are grown in a forest, as in forestry, the forest becomes the farm field F1. In this case, the crop V1 grown in the farm field F1 is a garden plant, a tree and the like. However, the work target area where the work machine performs works is not limited to the farm field F1, but may be any area other than the farm field F1. For example, when the work machine is a construction machine, the work target area is a site where the construction machine works.

In the present embodiment, as an example, the spray machine 1 is assumed to be a vehicle that, while moving in the farm field F1 as an orchard such as a vineyard or an apple orchard, sprays a chemical solution to the crop V1 grown in the farm field F1. In this case, the chemical solution is an example of the spray matter. Further, the crop V1 is an example of a spray target to which the spray matter (chemical solution) is sprayed, such as a grape tree. The crop V1, which is the spray target, is also an example of a target of the work to be performed by the spray machine 1 as the work machine. The "chemical solution" referred to as the spray matter here is agricultural chemicals used for higher efficiency of agriculture or preservation of agricultural products, and include herbicides, fungicides, mold inhibitors, insecticides, herbicides, rodenticides, and the crop V1's growth promoters and germination inhibitors.

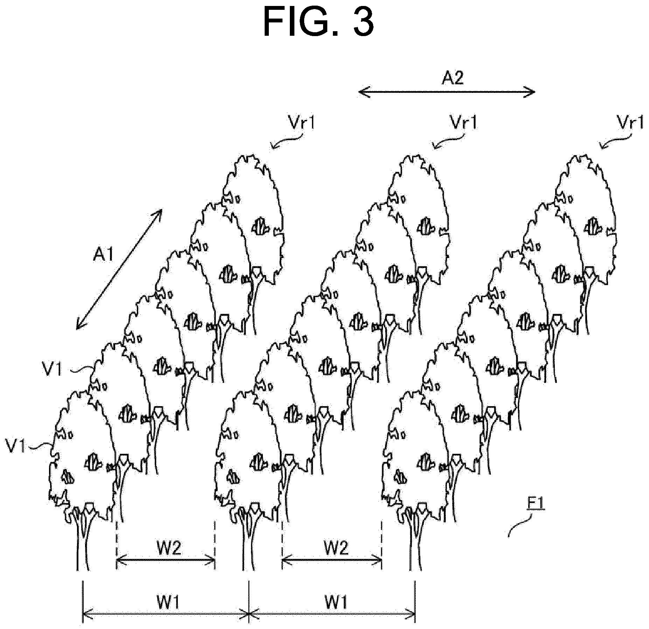

The crops V1 are placed in multiple rows at given intervals in the farm field F1. Specifically, as shown in Fig. 3, multiple crops V1 are planted in a manner to be linearly arranged in a longitudinal direction A1 in a plan view. The multiple crops V1 linearly arranged in the longitudinal direction A1 constitute a crop row Vr1. Fig. 3 exemplifies three crop rows Vr1, each including six crops V1 arranged in the longitudinal direction A1. Each of the crop rows Vr1 is placed at a given pitch W1 in a width direction A2. As a result, a work route that has a width W2 (< W1), which corresponds to the interval between the crop rows Vr1, and that extends along the longitudinal direction A1 is formed between the adjacent crop rows Vr1. The spray machine 1, while moving (running) in the longitudinal direction A1 through this work route, sprays the spray matter (chemical solution) to the crop V1.

Though to be described in detail below, the spray machine 1 running in the farm field F1 includes a gate-shaped machine body 10. That is, the machine body 10 has a first block 10L and a second block 10R which are placed side by side in a right and left direction D2, and a connecting portion 10C which connects upper end portions of the first block 10L and second block 10R to each other. As a result, the machine body 10, with the first block 10L, the second block 10R and the connecting portion 10C, constitutes a gate shape surrounding three sides, that is, left, right, and upper sides of a space Sp1. That is, the space Sp1 open to a front/back direction D3 is formed inside the machine body 10.

Further, the spray machine 1 is provided with a run unit 11 that includes a pair of crawlers 111L, 111R arranged in the right and left direction D2. The pair of crawlers 111L and 111R are provided below the first and second blocks 10L and 10R, respectively, and are positioned on both sides of the right and left direction D2 with respect to the space Sp1.

As shown in Fig. 2, the spray machine 1, while running in an attitude of straddling the one crop row Vr1 with the gate-shaped machine body 10, can spray the spray matter (chemical solution) to the crop V1 in the crop row Vr1 and the crop V1 in the crop row Vr1 adjacent to this crop row Vr1. In other words, the spray machine 1 can run in a manner to pass the crop V1, which is the spray target (work target), through the space Sp1 inside the gate-shaped machine body 10. That is, as shown in Fig. 2, when three crop rows Vr11, Vr12, and Vr13 arranged in the right and left direction D2 are present, the spray machine 1 can run with the machine body 10 straddling the optional work row Vr1 of these three crop rows Vr11, Vr12, and Vr13.

Here, when the machine body 10 straddles the center crop row Vr12, the first block 10L runs on the work route between the left-end crop row Vr11 and the crop row Vr12, and the second block 10R runs on the work route between the right-end crop row Vr13 and the crop row Vr12. Then, the spray machine 1 can simultaneously spray the spray matter (chemical solution) to the crop V11 in the crop row Vr11, the crop V12 in the crop row Vr12, and the crop V13 in the crop row Vr13. As described above, the spray machine 1 according to the present embodiment can simultaneously spray the spray matter (chemical solution) to the spray targets (crops V1) in three rows during running, and thus, the spray work is more efficient as compared with a configuration of spraying row by row.

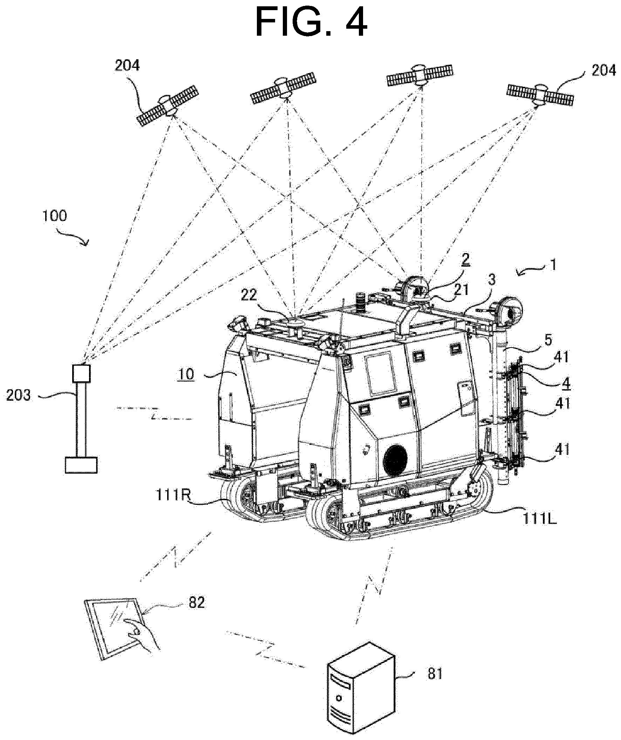

Further, in the present embodiment, as an example, the spray machine 1 is an unmanned machine that is actuated by an automatic driving, not by a human (operator) operation (including a remote control). Thus, as shown in Fig. 4, the spray machine 1 constitutes a spray control system 100 together with a server 81, a user terminal 82, a base station 203, a satellite 204, and the like. In other words, the spray control system 100 includes the spray machine 1, the server 81, the user terminal 82, the base station 203, and the satellite 204. However, at least one of the server 81, the user terminal 82, the base station 203, and the satellite 204 does not have to be included in the component elements of the spray control system 100; for example, the spray control system 100 does not have to include the satellite 204.

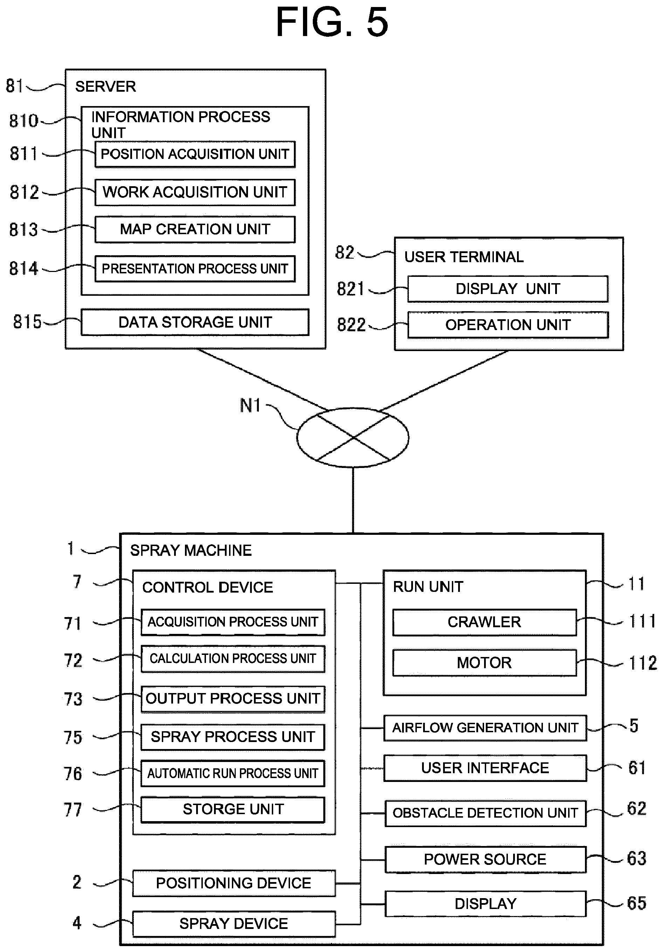

The spray machine 1, the server 81, and the user terminal 82 are communicatable with each other. The term "communicatable" referred to in the present disclosure means that information can be sent and received directly, or indirectly via a communication network N1 (see Fig. 5), a relay or the like, by a proper wired or wireless (radio wave medium or optical medium) communication method. For example, the spray machine 1 and the user terminal 82 are communicatable via the communication network N1 such as the Internet, a LAN (Local Area Network), a WAN (Wide Area Network), a public telephone network, a mobile telephone network, a packet network, a wireless LAN or the like. Further, each of the spray machine 1 and the user terminal 82 is communicatable also with the server 81 via the communication network N1 such as the Internet.

The satellite 204 is a positioning satellite constituting a satellite positioning system such as GNSS (Global Navigation Satellite System) or the like and sends a GNSS signal (satellite signal). The base station 203 is a reference point (reference station) that constitutes the satellite positioning system. To the spray machine 1, the base station 203 sends correction information for calculating a current position and the like of the spray machine 1.

The spray machine 1 according to the present embodiment includes a positioning device 2 that detects the current position (latitude, longitude, altitude and the like), the current azimuth and the like of the machine body 10. The positioning device 2 uses the GNSS signal sent from the satellite 204, thereby to execute a positioning process to identify (calculate) the current position, current azimuth and the like of the machine body 10. The positioning device 2 employs, for example, a high accuracy positioning method such as RTK (Real Time Kinematic) positioning which executes the positioning based on positioning information (GNSS signal and the like) received by two receivers (the base station 203 and the antenna 21) and the correction information generated at the base station 203.

The user terminal 82 is an information process device such as a tablet terminal and a smartphone. The user terminal 82 has a display unit 821 (see Fig. 5) and an operation unit 822 (see Fig. 5).

Here, the user using the user terminal 82 may or may not be the same person as the operator operating (driving) the spray machine 1. Further, concerning the user using the user terminal 82, a single user may be set up for one farm field F1, such as the owner of farm field F1, or multiple users may be set up for one farm field F1, for example. In the latter case; even for one farm field F1, for example, it is possible to set a different user for each work. Further, the user may be either an individual or a corporation, or a group (organization) including a collection of multiple individuals or corporations. There may be one user terminal 82 for one user, one user terminal 82 for multiple users, or multiple user terminals 82 for one user. When one user terminal 82 is provided for multiple users, each of the multiple users can be identified by a user ID, for example.

The display unit 821 is a user interface, which is for presenting information to the user (operator), such as a liquid crystal display or organic EL display that displays various types of information. The display unit 821, by display, presents various types of information to the user. In particular, in the present embodiment, the user terminal 82 has a browser function, and the display unit 821 can display information such as various web pages.

The operation unit 822 is a user interface, such as a mouse or a keyboard, for receiving an operation input by the user. The operation unit 822 outputs an electric signal that accords to the operation by the user, for example, thereby to receive various operations by the user. In particular, in the present embodiment, the user terminal 82 has a browser function, and the operation unit 822 can receive various operations on the web page displayed on display unit 821.

The operator, on the operation screen displayed on the display unit 821, operates the operation unit 822, making it possible to execute an operation to register the various types of information. Further, the operator operates the operation unit 822, making it possible to give a work start instruction, a run stop instruction and the like to the spray machine 1. In addition to the configuration described above, the user terminal 82 is further provided with a communication unit, a storage unit, and a processor.

The server 81 is an information process device such as a server device. To the spray machine 1, the server 81 sends information such as a target route or the like for the automatic run of the spray machine 1.

Further, the spray machine 1 can automatically (autonomously) run along the preset target route. For example, the spray machine 1, from a work start position to a work end position, automatically runs along the target route that includes multiple work routes and transfer routes. The multiple work routes are each a linear route along which the spray machine 1 performs the work (spray work) on the crop V1 which is the work target (spray target), and the transfer route is a route along which the spray machine 1 runs between the crop rows Vr1 without performing the spray work and which may include a turn route and a linear route.

Further, the spray machine 1 automatically runs in a given row order. In the example in Fig. 2, the spray machine 1 runs by straddling the crop row Vr11, then straddling the crop row Vr12, and then straddling the crop row Vr13. In this way, the spray machine 1 performs the automatic run according to a preset order of the crop rows Vr1. The spray machine 1 may run one row in the order in which the crop rows Vr1 are arranged, or may run every plural rows.

Further, in the present embodiment; for convenience of description, a vertical direction in a state where the spray machine 1 is usable is defined as an up and down direction D1, as shown in Fig. 1. Further, the right and left direction D2 and the front/back direction D3 each are defined with reference to the direction viewed from a center point of the spray machine 1 in plan view. That is, the spray machine 1's forward direction seen when the spray machine 1 is moving forward is a front in the front/back direction D3, and the spray machine 1's forward direction seen when the spray machine 1 is moving back is a rear in the front/back direction D3. However, these directions are not intended to limit a use direction (direction in use) of the spray machine 1.

Further, the term "parallel" referred to in the present disclosure means, in addition to the case where two straight lines on one plane do not intersect no matter how far they are extended, that is, where the angle between the two is strictly 0 degrees (or 180 degrees), a case where the angle between the two has a relation within an error range of about several degrees (less than 10 degrees, for example) relative to 0 degree. Similarly, the term "orthogonal" referred to in the present disclosure means, in addition to the case where the angle between the two is exactly 90 degrees, a relation that the angle between the two is within an error range of about several degrees (less than 10 degrees, for example) relative to 90 degrees.

### [2] Details of Spray Machine

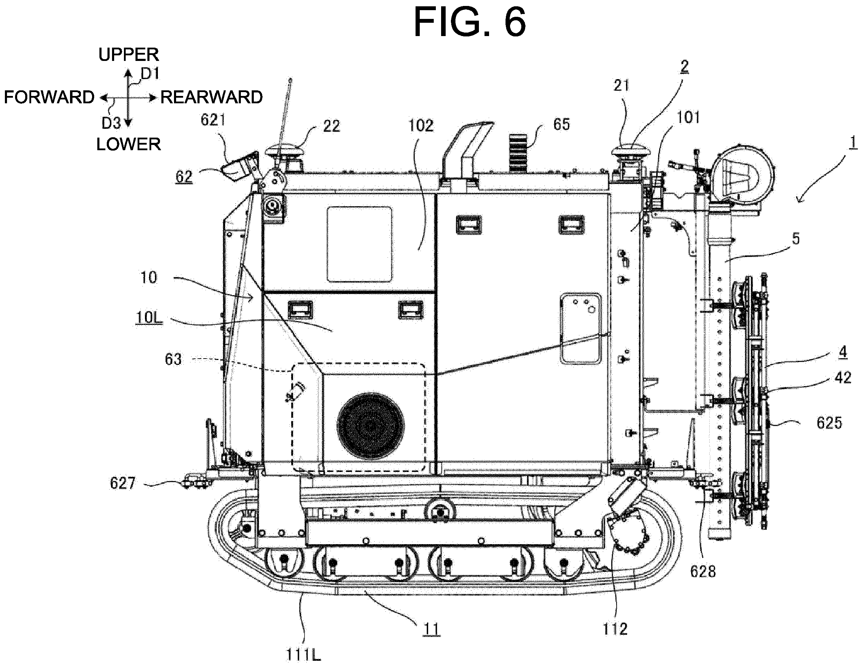

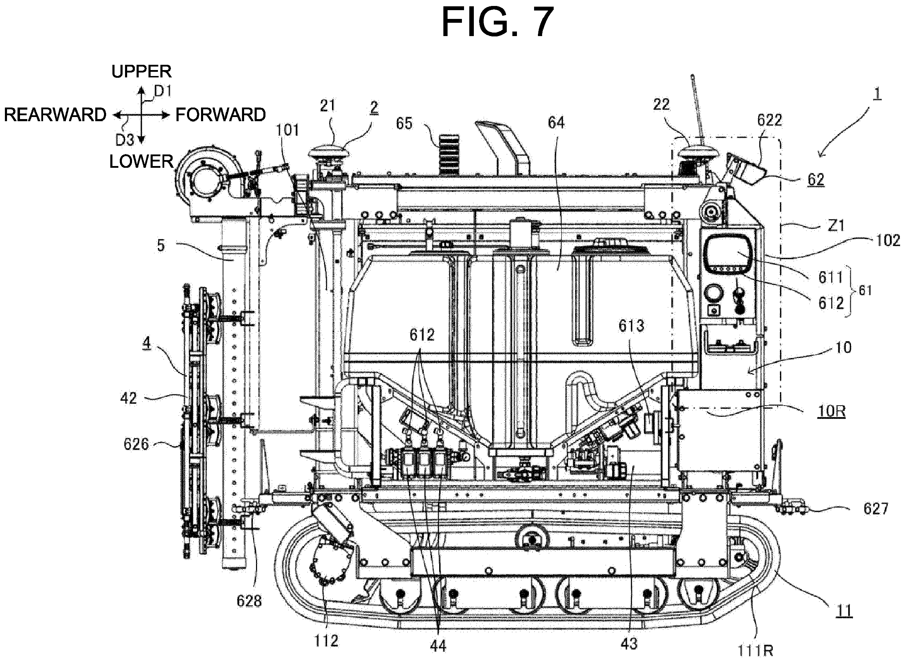

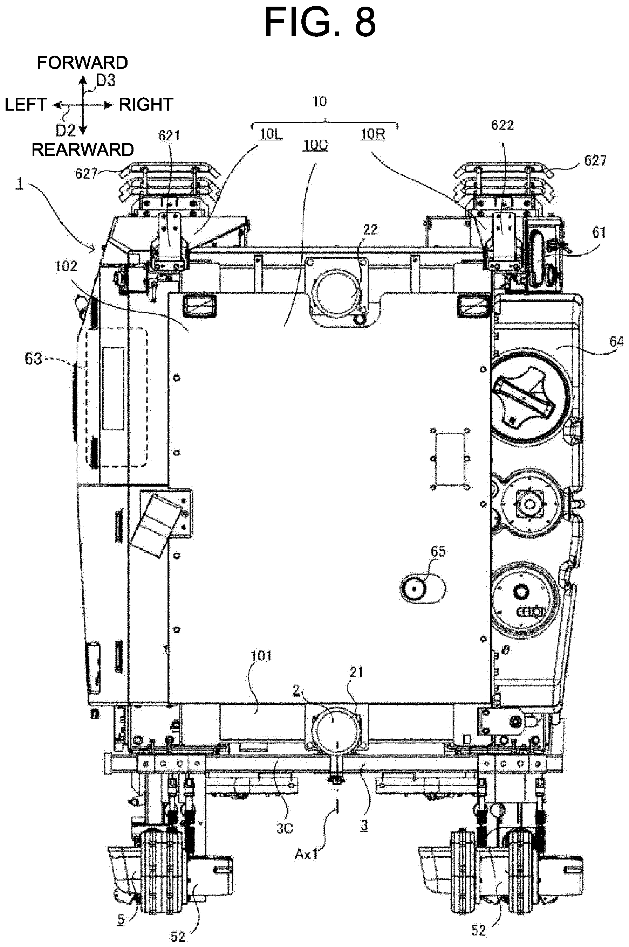

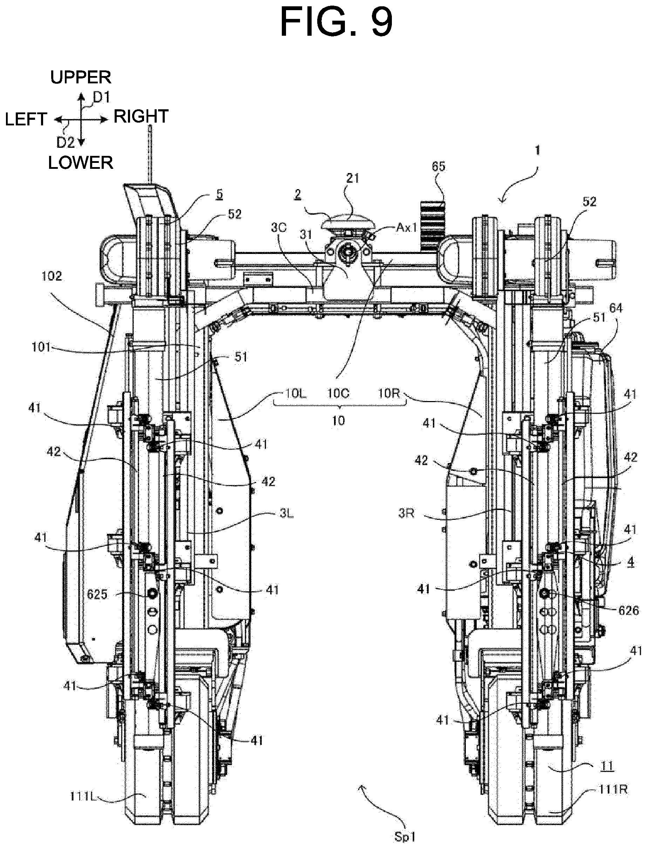

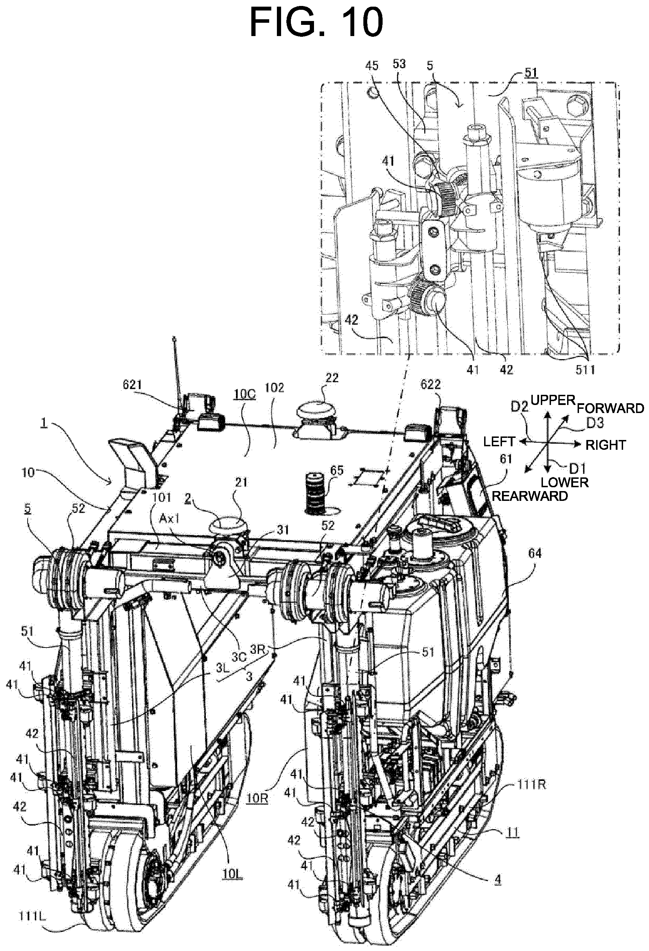

Next, the configuration of the spray machine 1 will be described in more detail with reference to Figs. 1, 2, 5 to 10. Fig. 1 is an external view of the spray machine 1 when viewed from the front left side, and Fig. 2 is an external view of the back face of the spray machine 1 when viewed from the back face side. Fig. 5 is a schematic block diagram showing the main configuration of the spray machine 1. Fig. 6 is an external view of the left lateral side of the spray machine 1 when viewed from the left side, Fig. 7 is an external view of the right lateral side of the spray machine 1 when viewed from the right side, and Fig. 8 is an external view of an upper side of the spray machine 1 when viewed from above. Fig. 9 is an external view of the back side of the spray machine 1, viewed from the back side. Fig. 10 is a schematic view showing the spray machine 1 when viewed from diagonally behind, with a partially enlarged view shown within the balloon.

The spray machine 1 includes the machine body 10, the run unit 11, the support frame 3, and a spray device 4. In the present embodiment, as shown in Fig. 5, the spray machine 1 further includes the positioning device 2, the control device 7, an airflow generation unit 5, a user interface 61, an obstacle detection device 62, a power source 63, a tank 64 (see Fig. 7), a display 65 and the like. Further, the spray machine 1 further includes a communication terminal, a fuel tank, a battery and the like. In the present embodiment, the spray machine 1's structures including the machine body 10, the support frame 3 and the like are basically made of metal, and the material is selected according to required strength, weather resistance and the like. However, the structure of the spray machine 1 is not limited to being made of metal, but resin, wood or the like, for example, may be used as appropriate.

The machine body 10 is the main body of the spray machine 1, and supports most of the spray machine 1's component elements including the positioning device 2, and the support frame 3 and the like. The machine body 10 has a frame 101 (see Fig. 2) and a cover 102. The frame 101 is a member that constitutes the framework of the machine body 10, and supports heavy objects such as the power source 63, the tank 64 and the like. The cover 102 is a member that constitutes an outline of the machine body 10, and is so mounted to the frame 101 as to cover at least part of the frame 101 and part of a member mounted to the frame 101. In a part of the back face and of the right lateral face of the machine body 10, the frame 101 is not covered with the cover 102, thus exposing the frame 101. The cover 102 is divided into multiple parts, and these multiple parts are so configured as to be individually removable from the frame 101. Thus, regarding the cover 102, only a part corresponding to some devices (members) such as the power source 63, for example, is removable, making it possible to expose the some devices (members) such as the power source 63.

The machine body 10 has the first block 10L and the second block 10R which are placed side by side in the right and left direction D2, as described above. In the right and left direction D2, the first block 10L and the second block 10R are opposed to each other at an interval of a certain value or more. In the present embodiment, as an example, the first block 10L is positioned on the left side and the second block 10R is positioned on the right side. Thus, the left side part of the machine body 10 includes the first block 10L, and the right side part of the machine body 10 includes the second block 10R. Further, the machine body 10 has a connecting portion 10C which connects the first block 10L with the second block 10R. In a front view (viewed from the front), the connecting portion 10C has a length along the right and left direction D2, and the first block 10L and the second block 10R have lengths along the up and down direction D1, respectively.

Here, the connecting portion 10C connects the upper end portions of the first block 10L and the second block 10R to each other, in other words, the first block 10L and the second block 10R protrude downward from both end portions (in the right and left direction D2) of the connecting portion 10C, respectively. As a result, the machine body 10, by the first block 10L, the second block 10R and the connecting portion 10C, constitutes a gate-shape that is open downward in addition to both sides in the front/back direction D3. And, inside the machine body 10, there is formed the space Sp1 that has three sides thereof surrounded by the first block 10L, the second block 10R, and the connecting portion 10C, and that is open to the front/back direction D3.

In short, between the first block 10L and the second block 10R, the machine body 10 forms the space Sp1 through which the crop V1 (work target) to be a target of the work (spray work) by the spray device 4 (work unit) is passed, as shown in Fig. 2. Specifically, dimensions of each part of the machine body 10 are so set as to form the space Sp1 with a height and a width equal to or larger than a standard size of the crop V1 as the spray target. Thus, in the case of the crop V1 with the standard size, the machine body 10, in a state straddling the crop V1, allows the crop V1 to pass through the space Sp1 at an open interval of a given value or more so that the crop V1 does not contact the machine body 10. During the crop V1 passing through the space Sp1, the first block 10L is positioned on the left of the crop V1, the second block 10R is positioned on the right of the crop V1, and the connecting portion 10C is positioned above the crop V1.

More specifically, in the present embodiment, the machine body 10 is constituted substantially symmetrically in the right and left direction D2. The first block 10L and the second block 10R are formed having substantially the same size and the same rectangular shape in side view. The first block 10L and the second block 10R have flat shapes in the right and left direction D2, such that a dimension in the right and left direction D2 is the smallest among the up and down direction D1, the right and left direction D2, and the front/back direction D3, respectively. Further, the first block 10L and the second block 10R are formed such that the parts above the center part in the up and down direction D1 are tapered, respectively, with the dimensions in the right and left direction D2 getting smaller as getting closer to upper ends. The connecting portion 10C, in plan view, is formed to be a rectangular shape such that the dimension is larger in the front/back direction D3 than in the right and left direction D2. The connecting portion 10C has a flat shape in the up and down direction D1, such that the dimensions in the up and down direction D1 are the smallest among the up and down direction D1, the right and left direction D2, and the front/back direction D3.

As described above, the machine body 10 can be roughly divided into three parts (blocks), that is, the first block 10L, the second block 10R, and the connecting portion 10C. Then, each of the first block 10L, the second block 10R and the connecting portion 10C has the frame 101 and the cover 102. In other words, each of the first block 10L and the second block 10R has the frame 101 and the cover 102. Further, most of the component elements of the spray machine 1, such as the positioning device 2 and the support frame 3, are provided in a distributed manner in the first block 10L, the second block 10R, and the connecting portion 10C.

The run unit 11 is a run device (vehicle body) that causes the spray machine 1 to run, and is provided in a lower portion of the machine body 10. The machine body 10 runs (including turning) on the ground by the run unit 11, thereby making it possible to move in the right and left direction D2 and the front/back direction D3 in the farm field F1. The above run unit 11 is provided on the machine body 10, thereby making it possible for the spray machine 1 to perform the work (spray work) while moving in the farm field F1.

The run unit 11 includes a pair of crawlers (crawler tracks) 111L, 111R arranged in the right and left direction D2. The pair of crawlers 111L, 111R are so placed as to be spaced apart by a certain interval in the right and left direction D2, and a space Sp1 is formed between these pair of crawlers 111L, 111R for passing the crop V1 as the spray target. That is, the left crawler 111L positioned on the left side of the space Sp1, and the right crawler 111R positioned on the right side of the space Sp1 face each other across the space Sp1. When the left crawler 111L and the right crawler 111R are not specifically distinguished, each crawler 111L, 111R is also simply referred to as "crawler 111". Further, the run unit 11 includes a motor 112 that drives the crawler 111. That is, the run unit 11 is a crawler-type (infinite track type) run device that drives the endless strip-shaped crawlers 111 with a motor 112, thereby to cause the spray machine 1 to run.

Here, at least two motors 112 are provided corresponding to a pair of crawlers 111L, 111R. The left side motor 112 which drives the left crawler 111L, and the right side motor 112 which drives the right crawler 111R can separately drive the crawler 111. In the present embodiment, as an example, the motor 112 is a hydraulic motor (hydraulic actuator), and, with hydraulic oil supplied from a hydraulic pump, drives the crawler 111. According to the above configuration, the machine body 10 can run relatively stably even when the road surface condition in the farm field F1 is rough.

Here, the crawler 111 and the motor 112 are provided below each of the first block 10L and the second block 10R. That is, the first block 10L has a left crawler 111L and a motor 112 that drives the left crawler 111L, and the second block 10R has a right crawler 111R and a motor 112 that drives the right crawler 111R. In the present embodiment, the pair of crawlers 111L, 111R and the pair of motors 112 are substantially symmetrical in the right and left direction D2. As described above, the pair of run units 11 are placed spaced apart in the right and left direction D2 by a portion of the space Sp1, thereby making it possible for the spray machine 1 to run with a relatively stable attitude on various road surface conditions of the farm field F1, including horizontally inclined slopes where either side in the right and left direction D2 is lower than the other.

Here, the pair of crawlers 111L and 111R, in a state where independent speed change is possible by a hydrostatic continuously variable transmission, is driven by power from the power source 63. Thus, the machine body 10, when the pair of crawlers 111L and 111R are driven to run straight forward at an equal speed, is put in a forward run state for linearly moving in the forward direction, and, when the pair of crawlers 111L and 111R are driven to run straight backward at an equal speed, is put in a backward run state for linearly moving in the backward direction. Also, the machine body 10, when the pair of crawlers 111L and 111R are driven to run backward at an uneven speed, is put in a forward turn state for turning in the forward direction, and, when the pair of crawlers 111L and 111R are driven to run backward at an uneven speed, is put in a backward turn state turning in the backward direction. Further, the machine body 10, when any one of the pair of crawlers 111L and 111R is stopped from driving and another thereof is driven, is put in a pivot turn state, and, when the pair of crawlers 111L and 111R are driven at the equal speed in the forward and backward directions, is put in a spin turn state (super pivot turn state). Further, the machine body 10, when the driving of the pair of crawlers 111L and 111R is stopped, is put in a run stop state.

The power source 63 and the like are mounted to the first block 10L, and the tank 64 and the like are mounted to the second block 10R. As described above, placing the components of the spray machine 1 on the first block 10L and second block 10R of the machine body 10 in a distributed manner balances the spray machine 1 in the right and left direction D2 and lowers a center of gravity of the spray machine 1. As a result, the spray machine 1 can run stably on a slope and the like in the farm field F1.

The positioning device 2 is a device that detects the current position and the current azimuth and the like of the machine body 10, as described above. The positioning device 2 has at least an antenna 21. The antenna 21 receives a GNSS signal and the like sent from the satellite 204. That is, the antenna 21 includes a position identifying antenna for identifying a machine body 10's position. Here, the antenna 21 is placed on an upper face (top face) of the machine body 10 so that the signal (GNSS signal) from the satellite 204 can be easily received. That is, the antenna 21 is placed at a position further higher than the highest machine body 10's position. Further, the positioning device 2 includes an attitude detecting unit and the like that detect the attitude of the machine body 10.

In the present embodiment, the positioning device 2 further has an antenna 22, which is a second antenna, separately from the antenna 21, which is a first antenna. The positioning device 2 receives the GNSS signal and the like by each of these two antennas 21, 22. Here, the antenna 22 (second antenna) is so placed as to be arranged relative to the antenna 21 (first antenna) in the front/back direction D3. As a result, the positioning device 2 is capable of sending and receiving the signals (GNSS signal and the like) by each of the antennas 21, 22. In particular, when the antennas 21, 22 are position identifying antennas, the current position can be identified at the front and rear portions of the machine body 10, respectively, and thus, the direction (current azimuth) of the machine body 10 can be also identified.

The support frame 3 is a member which is mounted to one end portion in the front/back direction D3 of the machine body 10 and which supports a spray nozzle 41 of the spray device 4, which will be described below. In the present embodiment, the support frame 3 is mounted to a rear end portion of the machine body 10. The support frame 3 has a gate shape similarly to the machine body 10, and, in a rear view (viewed from behind), is placed at a position overlapping the machine body 10. That is, the support frame 3 has a longitudinal frame 3L (first longitudinal frame) and a longitudinal frame 3R (second longitudinal frame) which are placed side by side in the right and left direction D2, and a transverse frame 3C which connects the upper end portions of the longitudinal frame 3L and the longitudinal frame 3R to each other. As a result, the support frame 3 constitutes a gate shape surrounding three sides, that is, left, right, and upper sides of the space Sp1 by the longitudinal frame 3L, the longitudinal frame 3R, and the transverse frame 3C.

Specifically, the support frame 3 has the longitudinal frame 3L and the longitudinal frame 3R which are placed side by side in the right and left direction D2. The longitudinal frame 3L and the longitudinal frame 3R are opposed to each other in the right and left direction D2 in a state at an interval of a certain value or more. In the present embodiment, as an example, the longitudinal frame 3L is positioned on the left side and the longitudinal frame 3R is positioned on the right side. Thus, the longitudinal frame 3L is positioned behind the first block 10L of the machine body 10, and the longitudinal frame 3R is positioned behind the second block 10R of the machine body 10. And, in the rear view (viewed from behind), the transverse frame 3C has a length along the right and left direction D2, and the longitudinal frame 3L and the longitudinal frame 3R have a length along the up and down direction D1, respectively.

Here, the transverse frame 3C connects the upper end portions of the longitudinal frame 3L and the longitudinal frame 3R to each other; thus, in other words, the longitudinal frame 3L and the longitudinal frame 3R protrude downward from both end portions (in the right and left direction D2) of the transverse frame 3C, respectively. As described above, the support frame 3 includes the transverse frame 3C having a length along the right and left direction D2, and the pair of longitudinal frames 3L, 3R having lengths along the up and down direction D1, respectively, and protruding downward from the both end portions of the transverse frame 3C. As a result, the support frame 3, by the longitudinal frame 3L, the longitudinal frame 3R, and the transverse frame 3C, constitutes a gate shape open downward in addition to the both sides in the front/back direction D3. And, inside the support frame 3, there is formed the space Sp1 surrounded on three sides by the longitudinal frame 3L, the longitudinal frame 3R and the transverse frame 3C and open to the front/back direction D3.

In short, as shown in Fig. 2, the support frame 3 forms the space Sp1, through which the crop V1 (work target, spray target) to be a target of the work (spray work) by the spray device 4 (work unit) is passed, between the pair of longitudinal frames 3L, 3R. Specifically, dimensions of each part of the support frame 3 are set so as to form the space Sp1 with a height and a width equal to or larger than the standard size of the crop V1 which is the spray target. Thus, in the case of the crop V1 with the standard size, the support frame 3, in a state of straddling the crop V1, allows the crop V1 to pass through the space Sp1 at an open interval of the given value or more so that the crop V1 does not contact the support frame 3. During the crop V1 passing through the space Sp1, the longitudinal frame 3L is positioned on the left of the crop V1, the longitudinal frame 3R is positioned on the right of the crop V1, and the transverse frame 3C is positioned above the crop V1.

More specifically, in the present embodiment, the support frame 3 is constituted substantially symmetrically in the right and left direction D2. The longitudinal frame 3L and the longitudinal frame 3R have a cylindrical shape with a circular cross section. In the present embodiment, as an example, each of the longitudinal frame 3L and the longitudinal frame 3R includes two cylindrical members provided side by side. The transverse frame 3C has a square cylindrical shape with a rectangular cross section. Here, the longitudinal frame 3L and the longitudinal frame 3R are firmly fixed to the transverse frame 3C, respectively, by appropriate fixing means such as connecting fittings, bracing fittings or welding. Thus, the longitudinal frame 3L and the longitudinal frame 3R remain a state orthogonal to the transverse frame 3C, respectively. In other words, in the rear view, each of an edge portion between the longitudinal frame 3L and the transverse frame 3C and an edge portion between the longitudinal frame 3R and the transverse frame 3C is orthogonal.

By the way, in the present embodiment, the support frame 3 is supported to the machine body 10 rotatably around a rotation axis Ax1 in a state where a relative positional relation between the pair of longitudinal frames 3L, 3R and the transverse frame 3C is maintained. The rotation axis Ax1 is an axis which passes through a fulcrum portion 31 provided on the transverse frame 3C and which is along the front/back direction D3. That is, the support frame 3 which supports the work unit (spray nozzle 41) is supported to the machine body 10 rotatably around the rotation axis Ax1 along the front/back direction D3. Here, the term "rotation axis" referred to in the present disclosure means a virtual axis (straight line) that serves as the center of a rotational motion of a rotating body. That is, the rotation axis Ax1 is a virtual axis without a substance. However, the rotation axis Ax1 may be a member with a substance such as a shaft pin, for example.

The spray device 4 has the spray nozzle 41 and the like. The spray device 4 performs the spray work in which a chemical solution as the spray matter tanked in the tank 64 is sprayed to the crop V1 which is the spray target. The spray nozzle 41 is supported to the support frame 3, and is a part that performs spraying of the spray matter. In the present embodiment, as an example, the spray nozzle 41 is a discharge port (spray portion) that actually serves as an outlet for the spray matter (chemical solution). The spray device 4 has a multiplicity (12 as an example in the present embodiment) of spray nozzles 41.

The spray device 4 includes, in addition to the spray nozzle 41, a spray pipe 42, a pump 43 (see Fig. 7), a valve 44 (see Fig. 7), a spray-dedicated piping, and other components. The spray nozzle 41 is an example of the work unit, which performs the work (spray work), and is supported to the support frame 3. Since the support frame 3 is supported to the machine body 10, the spray nozzle 41 (work unit) is indirectly supported to the machine body 10. In the present embodiment, the spray nozzle 41 is mounted to the spray pipe 42. The spray pipe 42 is connected to the pump 43 via the valve 44 by the spray-dedicated piping. To the spray pipe 42, the pump 43 pumps the spray matter (chemical solution) tanked in the tank 64. The valve 44 is an electronically controlled valve unit, such as an electromagnetic valve, that changes a pressure (spray pressure), a spray pattern and the like which are seen when the spray matter is to be sprayed. As a result, the chemical solution in the tank 64 is supplied by the pump 43 to the spray nozzle 41 via the valve 44 and the spray pipe 42, and is sprayed from the spray nozzle 41. Here, a chemical solution in a mist form is discharged (sprayed) from the spray nozzle 41.

In more detail, as shown in Figs. 9 and 10, the spray pipe 42 is a pipe having a length in the up and down direction D1, and the spray pipes 42 two in number are mounted to each of the longitudinal frame 3L and longitudinal frame 3R of the support frame 3. That is, in the present embodiment, the spray device 4 has four spray pipes 42 in total. The two (a pair) spray pipes 42 mounted to each of the longitudinal frame 3L and the longitudinal frame 3R are placed side by side in the right and left direction D2. Each of the spray pipes 42 causes the chemical solution, which is the spray matter poured from the upper end portion of the spray pipe 42, to be discharged from the three spray nozzles 41, while causing the chemical solution to flow downward through the pipe. Each of the spray pipes 42 has three spray nozzles 41 each mounted thereto; thereby, the spray device 4 has 12 spray nozzles 41 in total.

To the corresponding spray pipe 42, each of the spray nozzles 41 is so mounted as to change a position in the up and down direction D1. Accordingly, each of the spray nozzles 41 can change an interval to the adjacent spray nozzle 41 and the height position in the spray pipe 42 according to the spray target object (crop V1). Further, each of the spray nozzles 41 is so mounted as to change, according to the spray target, the positions in the up and down direction D1 and in the right and left direction D2 and a direction (angle), relative to the machine body 10. However, in the spray device 4, the number and the like of spray nozzles 41 provided in each of the spray pipes 42 can be properly changed according to the type of the spray target (crop V1), the length of each of the spray pipes 42, and the like.

The airflow generation unit 5 generates an airflow that conveys the spray matter (chemical solution) discharged from the spray nozzle 41. The airflow generation unit 5 is supported to the support frame 3 together with the spray nozzle 41. That is, the spray machine 1 according to the present embodiment is an air-assist type spray machine that sprays the spray matter (chemical solution) by using the airflow generated by the airflow generation unit 5. As a result, the spray machine 1 can efficiently spray the spray matter (chemical solution) even to the spray target (crop V1) in a position relatively far from the spray nozzle 41.

The airflow generation unit 5 has a duct 51 and an air blower 52. The duct 51 forms a flow route for air to flow along the up and down direction D1. The air blower 52 causes the air to flow through the duct 51. The airflow generation unit 5 forms an airflow when the air is blown out of a blowout hole 511 (see Fig. 10) formed in the duct 51. In short, from the blowout hole 511 through the flow route in the duct 51, the airflow generation unit 5 blows out the air which the air blower 52 sends into the duct 51, thereby generating the flow of the air (airflow) that flows outward from the blowout hole 511. This configuration can generate a stable airflow over a relatively wide area. Further, the airflow generation unit 5 can adjust a flowrate of the airflow by controlling the air blower 52. Then, the airflow generation unit 5, by adjusting the air flowrate, can adjust a conveying distance of the spray matter; the higher the air flowrate is, the farther the spray matter can be conveyed. Thus, the spray machine 1 according to the present embodiment can adjust the range of the spray device 4's spraying of the spray matter.

In more detail, the duct 51 is a pipe having a length in the up and down direction D1; the duct 51 one in number is mounted to each of the longitudinal frame 3L and longitudinal frame 3R of the support frame 3. That is, in the present embodiment, the airflow generation unit 5 has the ducts 51 two in total. On each of a left lateral face and right lateral face of the duct 51, there are formed the multiple blowout holes 511 arranged in a row along the up and down direction D1. Further, two spray machine pipes 42 of the spray device 4 are fixed to each of the ducts 51.

Here, the duct 51, the two spray pipes 42 mounted thereto, and the six spray nozzles 41 in total mounted to these two spray pipes 42 are placed symmetrically in the right and left direction D2. And, of the two spray pipes 42, the three spray nozzles 41 provided in the spray pipe 42 on the left side discharge the spray matter (chemical solution) toward the front left, and the three spray nozzles 41 provided in the spray pipe 42 on the right side discharge the spray matter (chemical solution) toward the front right. Thus, the misty spray matter discharged from the spray nozzle 41 on the left side is conveyed leftward on the airflow blown out of the duct 51 to the left, while the misty spray matter discharged from the spray nozzle 41 on the right side is conveyed rightward on the airflow blown out of the duct 51 to the right.

Thus, in the multiplicity (12 pieces) of spray nozzles 41, the three spray nozzles 41 provided in the spray pipe 42 on the leftmost end spray the chemical solution leftward to the crop V1 positioned on the outer left side of the machine body 10. In the multiple spray nozzles 41, the three spray nozzles 41 provided in the spray pipe 42 on the inner left side adjacent to the spray pipe 42 on the leftmost end spray the chemical solution rightward to the crop V1 positioned in the space Sp1 inside the machine body 10. In the multiple spray nozzles 41, the three spray nozzles 41 provided in the spray pipe 42 on the rightmost end spray the chemical solution rightward to the crop V1 positioned on the outer right side of the machine body 10. In the multiple spray nozzles 41, the three spray nozzles 41 provided in the spray pipe 42 on the inner right side adjacent to the spray pipe 42 on the rightmost end spray the chemical solution leftward to the crop V1 positioned in the space Sp1 inside the machine body 10.

With the above configuration, in the spray device 4; the two spray pipes 42 and the six spray nozzles 41 provided on the longitudinal frame 3L of the support frame 3 function as a spray unit on the left side. Further, the two spray pipes 42 and the six spray nozzles 41 provided on the longitudinal frame 3R of the support frame 3 function as the spray unit on the right side. Then, in a state of being capable of spraying in the right and left direction D2, the pair of right and left spray units are so placed behind the machine body 10 as to make the interval (space Sp1), which allows passage of the crop V1, between the both.

Further, in the spray device 4, the multiple (12 units) spray nozzles 41 are divided into multiple systems, and each system is configured to be controllable. As an example, in the four spray pipes 42; the six spray nozzles 41 provided on the inner two spray pipes 42 in the right and left direction D2 are classified into a first system, the three spray nozzles 41 provided in the spray pipe 42 at the leftmost end are classified into a second system, and the three spray nozzles 41 provided in the spray pipe 42 at the rightmost end are classified into a third system. Thus, the spray patterns by the spray device 4 include an all-spray pattern in which the spray matter (chemical solution) is sprayed from all the spray nozzles 41, a spray-stop pattern in which the spraying of the spray matter stops from all the spray nozzles 41, and a limited-spray pattern in which the direction of spraying is limited. The limited-spray pattern includes a first spray pattern in which only the six spray nozzles 41 of the first system perform spraying, a second spray pattern in which only the three spray nozzles 41 of the second system perform spraying, and a third spray pattern in which only the three spray nozzles 41 of the third system perform spraying. Further, the limited-spray pattern includes a fourth spray pattern in which only the nine spray nozzles 41 of the first system and the second system perform spraying, a fifth spray pattern in which only the nine spray nozzles 41 of the first system and the third system perform spraying, and a sixth spray pattern in which only the six spray nozzles 41 of the second system and the third system perform spraying.

The spray device 4 is controlled by the control device 7, and the multiple spray patterns described above (six patterns in total including the all-spray pattern and the six limited-spray patterns) are switched as appropriate. The valves 44 of the spray device 4 are provided for each system of the multiple spray nozzles 41; in the present embodiment, the valves 44 three in number corresponding to the three systems (first system, second system, and third system) are provided. These multiple (here three) valves 44 are individually controlled by the control device 7 thereby to change the spray pattern. Further, the spray device 4 can change the spray range of the spray matter also by changing the pressure (spray pressure) at which the spray matter is sprayed in each system. Further, in the present embodiment, the spray range of the spray matter can be adjusted also by adjusting the air flowrate of the airflow generation unit 5; thus, a more diverse spray range can be realized according to the spray target (crop V1) or the spray matter (chemical solution). The configuration of the spray device 4 is described in more detail in the column "[4] Configuration of Spray Device".

That is, in the present embodiment, the support frame 3 is not fixed relatively to the machine body 10, but is rather configured to be rotatable around the rotation axis Ax1. Rotating the support frame 3 also rotates, around the rotation axis Ax1, the multiple spray nozzles 41 supported to the support frame 3.

Further, the spray machine 1 according to the present embodiment does not include an actuator or the like that actively rotates the support frame 3. Thus, the support frame 3 rotates only after an external force acts on the support frame 3. For example, when the machine body 10 runs on a horizontally inclined slope, the support frame 3 rotates by its own weight, that is, the gravity acting on the support frame 3. In particular, when the support frame 3 and the members (the spray nozzle 41, the spray pipe 42, the airflow generation unit 5 and the like) supported to the support frame 3 have a symmetrical weight balance in the right and left direction D2, the support frame 3 is maintained in the neutral position as long as the machine body 10 is kept horizontal.

According to the rotatable support frame 3 as described above, the support frame 3, by rotating when the machine body 10 is running on the horizontally inclined slope, for example, prevents the spray nozzle 41 from causing an uneven spray rate (uneven spray) of the spray matter (chemical solution). In short, when the support frame 3 is firmly supported to the machine body 10, the machine body 10, as the case may be, is inclined while running on the horizontally inclined slope. And, in this case, as for the crop V1 (spray target) that extends vertically straight from the ground (farm field F1), the distances from the spray nozzle 41 are different between the upper portion and the lower portion of the crop V1, which may cause unevenness to the spray rate of the spray matter. In contrast, in the spray machine 1 according to the present embodiment; as for the support frame 3 and the spray nozzle 41 and the like which are supported to the support frame 3, the rotation of the support frame 3 can maintain the attitude same as that while the spray machine 1 running on the horizontal plane. Thus, even as for the crop V1 (spray target) extending vertically straight from the ground (farm field F1), the distances from the spray nozzle 41 between the upper portion and the lower portion of the crop V1 become less likely to vary, making it easier to suppress occurrence of unevenness in the spray rate of the spray matter.

The user interface 61 is a device that performs at least any one of outputting information to the user and receiving an operation from the user. Here, the user interface 61, as shown in Fig. 7, has a display unit 611 such as a liquid crystal display or an organic EL display that displays various types of information, and an operation unit 612 that receives an operation, such as a touch panel, a knob, or a pushbutton switch. An operator as an example of the user operates the operation unit 612 according to an operation screen displayed on the display unit 611 thereby to make it possible to make various types of settings. Specifically, the operator operates the operation unit 612 of the user interface 61 thereby to make the setting of an actuating condition and the like of the spray device 4. An example of the actuating conditions of the spray device 4 includes a pressure (jet pressure), a flowrate and the like seen when the spray matter is sprayed from the spray nozzle 41.

The obstacle detection device 62 includes a first sensor 621, a second sensor 622, a third sensor 623, and a fourth sensor 624. The first sensor 621 to the fourth sensor 624 are all placed to face the front of the machine body 10. The first sensor 621 is placed on a front left end portion on the upper face of the machine body 10, the second sensor 622 is placed on the front right end portion on the upper face of the machine body 10, the third sensor 623 is placed on a front face of the first block 10L, and the fourth sensor 624 is placed on the front face of the second block 10R, respectively. Further, the obstacle detection device 62 further includes a fifth sensor 625 (see Fig. 6) and a sixth sensor 626 (see Fig. 7). The fifth sensor 625 and the sixth sensor 626 are both placed to face the rear of the machine body 10. The fifth sensor 625 is mounted to the longitudinal frame 3L, and the sixth sensor 626 is mounted to the longitudinal frame 3R.

Each of the first sensor 621 to the sixth sensor 626 includes a sensor such as an image sensor (camera), a sonar sensor, a radar or a LiDAR (Light Detection and Ranging), for example, and detects a surrounding condition of the machine body 10. In the present embodiment, as an example, each of the first sensor 621 to the sixth sensor 626 is a three-dimensional sensor which measures a distance to each distance-measuring point (measuring target) in a measurement range by using a TOF (Time Of Flight) method which measures the distance to the distance-measuring point based on round-trip time for a light or a sound to reach the distance-measuring point and return. The surrounding conditions of the machine body 10 include, for example, presence or absence of an object (obstacle and the like) in front of the machine body 10 in the forward direction, a position (distance and azimuth) of the object, and the like.

The obstacle detection device 62 further includes a forward contact sensor 627 and a backward contact sensor 628. The forward contact sensors 627 are placed in a right and left pair on the front side of the machine body 10, and the backward contact sensor 628 are placed in a right and left pair on the rear side of the machine body 10. Each of the forward contact sensor 627 and the backward contact sensor 628 detects the obstacle when contacting the obstacle. Each of the sensors sends a detection signal to the control device 7 when detecting the obstacle.

The power source 63 is a drive source that supplies power at least to the run unit 11. The power source 63 has an engine, such as a diesel engine, for example. The power source 63 drives a hydraulic pump thereby to supply a hydraulic oil from the hydraulic pump to the motor 112 and the like of the run unit 11, thereby driving the run unit 11 and the like.

The tank 64 tanks the spray matter such as chemical solution. The spray matter tanked in the tank 64 is supplied to the spray device 4, and sprayed from the spray nozzle 41 of the spray device 4. From the outside, the tank 64 can be replenished with the chemical solution which is the spray matter. The capacity of the tank 64 is approximately 200L, as an example.

The display 65 is placed on the upper face of the machine body 10. The display 65 is formed in a columnar shape having a length in the up and down direction D1, as an example. The display 65 changes a lighting state in response to the actuating state (a run state, and a progress state of the spray work, and the like) of the spray machine 1. As a result, the actuating state of the spray machine 1 can be visually recognized even from the periphery of the spray machine 1.

The control device 7 is mainly configured by a computer system having one or more processors such as a CPU (Central Process unit), and one or more memories such as a ROM (Read Only Memory) and a RAM (Random Access Memory), and executes various processes (information process). According to the present embodiment, the control device 7 is an integrated controller that controls the overall spray machine 1, and includes, for example, an electronic control unit (ECU). However, the control device 7 may be provided separate from the integrated controller, and may be primarily composed of one or more processors.

As shown in Fig. 5, the control device 7 has an acquisition process unit 71, a calculation process unit 72, an output process unit 73, a spray process unit 75, an automatic run process unit 76, and a storage unit 77. In the present embodiment, as one example, the control device 7 is mainly composed of a computer system having one or more processors; thus, the one or more processors, by executing the control program, realize the above multiple functional units (acquisition process unit 71 and the like). These plural functional units included in the control device 7 may separately be provided in plural housings or may be provided in a single housing.

The control device 7 is so configured as to be communicable with a device provided at each unit of the machine body 10. That is, at least the run unit 11, the positioning device 2, the spray device 4, the airflow generation unit 5, the user interface 61, the obstacle detection device 62, the power source 63, and the display 65 are connected to the control device 7. This allows the control device 7 to control the run unit 11 and the spray device 4, etc., and to acquire an electric signal from the positioning device 2, the obstacle detection device 62, etc. Here, the control device 7 may send and receive various types of information (data) directly to and from each device, or indirectly through a relay or the like.

Further, the control device 7, in addition to the above functional units, includes an engine control unit, an HST (Hydro-Static Transmission) control unit which executes control on a hydrostatic continuously variable transmission, and the like. The engine control unit executes control on the engine (power source 63). The HST control unit executes control on the hydrostatic continuously variable transmission.

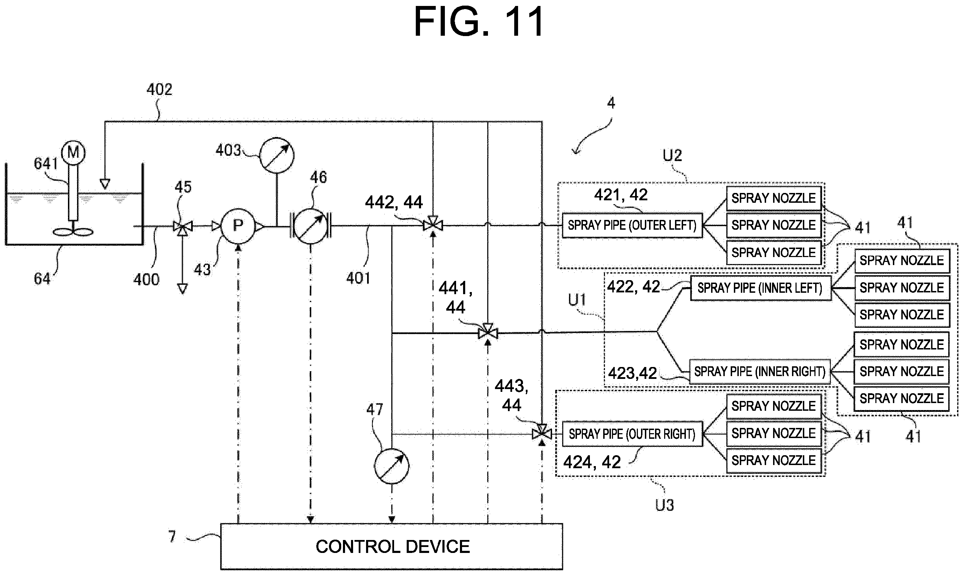

The acquisition process unit 71 executes the acquisition process to acquire the electric signal (including data) from each device. In the present embodiment, the acquisition process unit 71 acquires flowrate information from at least the spray device 4's discharge-side flowmeter 46 (see Fig. 11) which is described below. The discharge-side flowmeter 46 is provided in the spray matter (chemical solution)'s supply route 401 (see Fig. 11) to the multiple spray nozzles 41, detects the flowrate of the spray matter supplied from the tank 64 to the multiple spray nozzles 41, and outputs a flowrate signal showing the detection result (flowrate). The flowrate signal includes flowrate information on the spray matter's flowrate in the supply route 401. Further, from a level sensor provided in the tank 64, the acquisition process unit 71 acquires residual volume information on the residual volume of the spray matter (chemical solution) tanked in the tank 64. Further, from the positioning device 2, the acquisition process unit 71 acquires position information on the current machine body 10's position.

The "flowrate information" in the present disclosure is information on the flowrate of the spray matter, which, for example, may show the instantaneous flowrate per unit time (e.g., 1 second), or may show the accumulated flowrate over a certain transfer distance of the spray machine 1, or the accumulated flowrate over a certain time period. Further, the flowrate information may be shown as the flowrate itself, for example, "100 ml/sec", or as a specific index normalizing the flowrate. In the present embodiment, as an example, the flowrate information is the instantaneous flowrate per unit time (e.g., 1 second), which is shown as the flowrate itself.

However, the acquisition process unit 71 is not required to acquire flowrate information on the flowrate of the spray matter in the supply route 401, but may acquire flowrate information on the flowrate of the spray matter in the return route 402 (see Fig. 11) which is a route (flow route) of the spray matter from the supply route 401 to the tank 64. That is, the acquisition process unit 71 acquires flowrate information on the flowrate of the spray matter in at least one of the spray matter's supply route 401 from the tank 64 to the multiple spray nozzles 41 and the spray matter's return route 402 from the supply route 401 to the tank 64.

The calculation process unit 72 executes a calculation process to acquire the spray rate information. As described in detail in the column "[5.2] How to Acquire Spray Rate Information", the calculation process unit 72 calculates the spray rate information on the spray matter (chemical solution)'s spray rate based on the flowrate information acquired by the acquisition process unit 71 and based on the open and close state of the multiple spray nozzles 41 for each of the multiple systems U1, U2, U3 (see Fig. 11). The open and close state of the multiple spray nozzles 41 for each of the multiple systems U1, U2, U3 is identified, for example, by a "spray pattern" controlled by the control device 7 (spray process unit 75).

The "spray rate information" in the present disclosure is information on the spray rate of the spray matter, and may show, for example, the instantaneous spray rate per unit time (e.g., 1 second), the cumulative amount of the spray rate over a certain transfer distance of the spray machine 1, or the cumulative amount of the spray rate over a certain time period. The spray rate information may be shown in terms of the spray rate itself, such as "100 ml/sec," or t may be shown in terms of a specific index normalizing the spray rate, for example. As an example, in the present embodiment, the spray rate information is information that shows the instantaneous spray rate per unit time (e.g., 1 second) as the spray rate itself.

The output process unit 73 executes an output process to output various types of information. In the present embodiment, the output process unit 73 displays at least the spray rate information, which is calculated by the calculation process unit 72, on the display 65, thereby to output the spray rate information. Further, to the server 81, the output process unit 73 outputs (sends) the machine body 10's position information acquired by the acquisition process unit 71 associated with the spray rate information in that position (point). Here, the outputting mode of the output process unit 73 is not limited to displaying on the display unit (display 65, etc.) or sending to the server 81, but may also include sending to a terminal (user terminal 82, etc.) other than the server 81, writing in a non-temporary recording medium such as the storage unit 77, printing, or sound (including voice) outputting or other means, or a combination of thereof.

The spray process unit 75 executes a spray control process related to the work (spray work) of the spray device 4 and airflow generation unit 5, etc. Specifically, when the spray machine 1 starts automatically running in the work start position; to the spray device 4, the spray process unit 75, based on the control information included in the predetermined target route, outputs a switch signal to switch the spray pattern. When receiving the switch signal, the spray device 4 executes the spray work in a given spray pattern. This means that the multiple spray nozzles 41 in the spray device 4 spray the spray matter at least during the automatic run of the machine body 10.

The automatic run process unit 76 causes the machine body 10 to automatically run along the target route of the farm field F1 based on positioning information and the like acquired from the positioning device 2. Specifically, the automatic run process unit 76 causes the run unit 11 to automatically run along the target route based on the positioning information including the machine body 10's position and azimuth measured by the positioning device 2. For example, when the positioning information is ready for the RTK positioning, the operator pressing the start button (automatic run start instruction) on the operation screen of the user terminal 82 causes the user terminal 82 to output an automatic run start instruction (work start instruction) to the spray machine 1. Acquiring the automatic run start instruction from the user terminal 82, the automatic run process unit 76 causes the spray machine 1 to start automatically run based on the positioning information of the machine body 10 positioned by the positioning device 2. As a result, the spray machine 1 starts automatically running along the target route , starting the spray work by the spray device 4.

The storage unit 77 is a non-transitory storage medium including, for example, RAM or external memory, which stores various types of information. In the present embodiment, the outputting mode of the output process unit 73 includes writing in the storage unit 77 of at least the combination of the spray rate information and the machine body 10's position information. Thus, at least the position information on the current machine body 10's position and the spray rate information in that position (point) are stored in the storage unit 77 in association with each other. Also, the storage unit 77 stores a log related to the spray work, such as the date and time when the spray rate information was acquired or the date and time when the flowrate information which is the source of the spray rate information was acquired, information identifying the time when the spray work was performed, information identifying the farm field F1, and information identifying the operator. Further, the storage unit 77 stores information such as the target route used for the automatic run of the spray machine 1.

The communication terminal is a communication interface that connects the spray machine 1 to the communication network by wired or wireless connection, and executes data communication, which accords to a given communication protocol, with external devices such as the user terminal 82, the server 81 and the like via the communication network. Electronic devices such as the positioning device 2, the control device 7, and the communication device are connected to a battery, and can be actuated even during the stop of the power source 63.

### [3] Details of Server

Next, details of the server 81, which together with the spray machine 1 and user terminal 82, etc., constitutes the spray control system 100, are described with reference to Fig. 5.

The server 81 is provided with an information process unit 810 and a data storage unit 815, etc. The server 81 is not limited to a single computer, but may also be a computer system in which plural computers work together. Also, the various types of processes executed by the server 81 may be executed by multiple processors in a distributed manner.

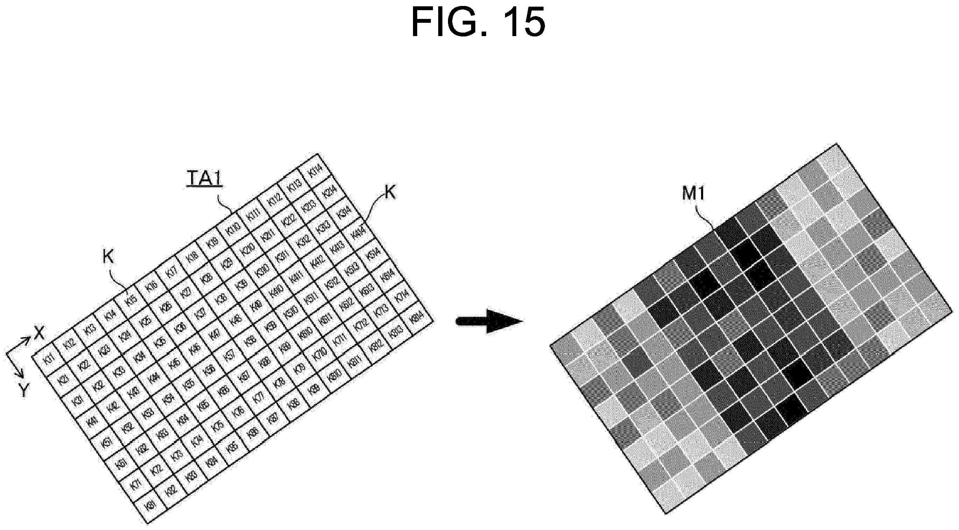

The data storage unit 815 includes a nonvolatile storage device such as an HDD (Hard Disk Drive) or SSD (Solid State Drive) which memorizes various types of information. The data storage unit 815 stores (memorizes) a control program such as the spray machine 1's control program to cause the information process unit 810 to generate a work map M1 (see Fig. 15) described below. The control program of the spray machine 1 is provided by being recorded in a computer-readable non-transitory recording medium, for example, is read from the non-transitory recording medium by a reading device of the server 81, and is stored in the data storage unit 815. The control program of the spray machine 1 may be supplied (downloaded) to the server 81 via a telecommunication line (communication network N1) from a server other than the server 81, to be stored in the data storage unit 815.

The data storage unit 815 stores work support information and other information including the work map M1. That is, the work map M1 created (generated) by the server 81 is stored in the data storage unit 815.

The information process unit 810, for example, is mainly composed of a computer system having one or more processors, such as a CPU, and one or more memories, such as ROM and RAM, thereby to execute various processes (information processes). The information process unit 810 has functional units such as a position acquisition unit 811, a work acquisition unit 812, a map creation unit 813, and a presentation process unit 814. The above plural functional units included in the information process unit 810 may be provided in plural housings in a distributed manner, or may be provided in a single housing. Executing, by one or more processors, various processes which accord to the control program of the spray machine 1, the information process unit 810 functions as the various functional units (processing units) described above. At least a part of the above various functional units in the information process unit 810 may be composed of an electronic circuit.

The position acquisition unit 811 acquires position information showing the spray machine 1's position in the farm field F1. The spray machine 1 performs the spray work while moving (running) in the farm field F1; thus, during the spraying period when the spray machine 1 performs the spray work, the position acquisition unit 811 acquires multiple pieces of positional information of the spray machine 1 moving in the farm field F1.

The work acquisition unit 812 acquires, as work information, spray rate information on the spray work performed by the spray machine 1. In the present embodiment, the work acquisition unit 812 acquires spray rate information for each position of the spray machine 1 during the work period. That is, during the work period, the spray machine 1 moves within the farm field F1; thus, the work acquisition unit 812 acquires multiple pieces of spray rate information as the spray machine 1 moves.

The multiple pieces of position information and multiple pieces spray rate information during the work period may be sent from the spray machine 1 to the server 81 in real time, or may be sent from the spray machine 1 to the server 81 in batches at the end of the work period.

The map creation unit 813, based on the spray rate information, creates the work map M1 that has multiple zones K each setting the spray rate and that corresponds to the work area (farm field F1 in the present embodiment). Specifically, for each target area TA1, the map creation unit 813 creates the work map M1 which is made by associating the spray rate with the multiple zones K. The "work map" in the present disclosure is data where the spray rate is assigned to each of the multiple zones K set in the target area TA1.

In the present embodiment, the map creation unit 813 associates, for example, the spray rate acquired for each position of the spray machine 1 to the multiple zones K, thereby to generate the work map M1. That is, for example, the map creation unit 813 creates the work map M1 (spray rate map) that shows the spray rate's distribution within the farm field F1. According to the above work map M1, the user checks the work map M1, thereby to make it possible to grasp the state of the spray work in the entire farm field F1. The above work map M1 is used, for example, so as to evaluate the spray work and to plan the next year's spray work. The work map M1 is to be described in detail in the column "[5.3] Work Map".

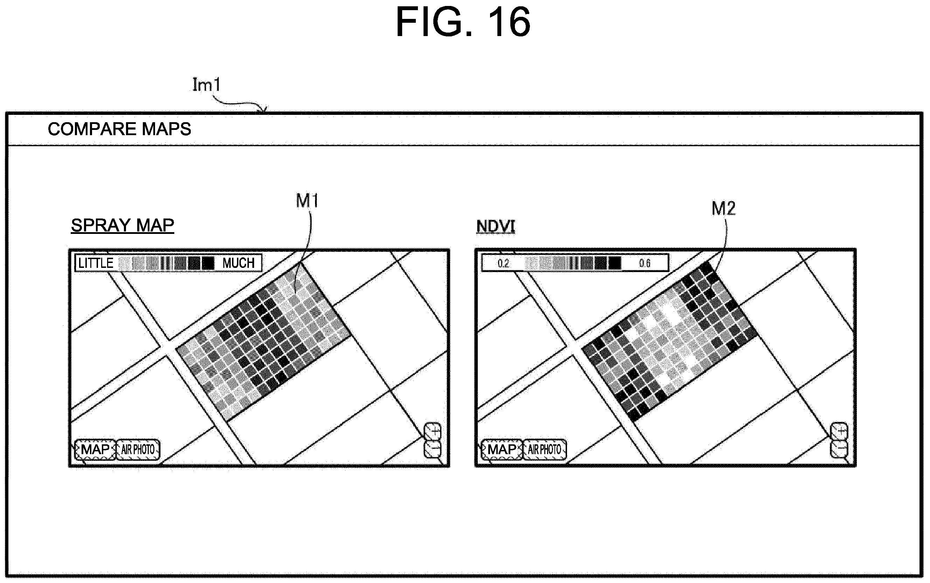

The presentation process unit 814 executes the process of presenting, to the user, the work map M1, etc. created by the map creation unit 813. In the present embodiment, the presentation process unit 814 generates a display image Im1 (see Fig. 16) including the work map M1, and causes the display unit 821 of the user terminal 82 to display the display image Im1, for example, thereby to present the work map M1. The "image", such as the display image Im1 in the present disclosure, means an image (picture) displayed on the display unit 821, and includes figures, graphics, photographs, text, and moving images.

As an example in the present embodiment, the presentation process unit 814 generates various web pages and sends information on the web pages to the user terminal 82 thereby to make it possible to display the various web pages at the user terminal 82. As another mode; by sending, to the user terminal 82, the data necessary to display various web pages, the presentation process unit 814 may cause the user terminal 82 to display the various web pages. Further, the mode of presenting, to the user, the work map M1, etc. by the presentation process unit 814 is not limited to displaying, but may also include writing to a non-transitory recording medium such as the data storage unit 815, sending to a terminal other than the user terminal 82, printing, sound (including voice) outputting or other means, or a combination thereof.

In addition to the configuration described above, the server 81 is further provided with a function to create the target route for causing the spray machine 1 to automatically run, a communication unit, and a user interface.

### [4] Configuration of Spray Device

Next, the configuration of the spray device 4 of the spray machine 1 will be described in more detail with reference to Fig. 11. Fig. 11 schematically shows the configuration of the spray device 4. In Fig. 11, the solid line indicates the route (flow route) through which the spray matter (chemical solution) passes, and the single-dotted arrow indicates the route of the electric signal.

The spray machine 1 according to the present embodiment, as described above, the spray device 4 has a multiplicity (12 pieces) of spray nozzles 41, the four spray pipes 42, the pump 43, the three valves 44, and the spray-dedicated piping, etc. Further, the spray device 4 has a water-stop drain valve 45, a discharge-side flowmeter 46, a pressure sensor 47, and a pressure gauge 403. In Fig. 11, a filters, a manual adjustment valve and the like provided in the spray-dedicated piping are omitted as appropriate.

The four spray pipe 42 include a first spray pipe 421 (outer left) positioned at the leftmost end, a second spray pipe 422 (inner left) positioned on the inner left, a third spray pipe 423 (inner right) positioned on the inner right, and a fourth spray pipe 424 (outer right) positioned at the rightmost end. Each of the above first to fourth spray pipes 421 to 424 is provided with three spray nozzles 41, and the spray matter (chemical solution) supplied to each of the spray pipes 42 is sprayed (discharged) from the three spray nozzles 41 provided in the spray pipes 42. The six spray nozzles 41 provided in the second and third spray pipes 422 and 423 are classified into the first system, the three spray nozzles 41 provided in the first spray pipe 421 are classified into the second system, and the three spray nozzles 41 provided in the fourth spray pipe 424 are classified into the third system.

In short, in the present embodiment, the multiple spray nozzles 41, which are supported to the machine body 10 and which spray the spray matter, are classified into several (here three) systems U1, U2 and U3, as shown in Fig. 11. The first system U1 includes a second spray pipe 422, a third spray pipe 423, and six spray nozzles 41 provided for the above. The second system U2 includes a first spray pipe 421 and three spray nozzles 41 provided for the above. The third system U3 includes a fourth spray pipe 424 and three spray nozzles 41 provided for the above. Thus, the multiple systems U1, U2 and U3 each include the spray pipe 42 that extends along the up and down direction D1 and supplies the spray matter to one or more of the multiple spray nozzles 41. This makes it possible to switch the spray pattern in unit of spray pipes 42 as the spray matter's supply route to the spray nozzles 41.

Here, the spray-dedicated piping includes a tank route 400 which is the route (flow route) of the spray matter from the tank 64 to the pump 43, a supply route 401 which is the route (flow route) of the spray matter from the pump 43 to the spray pipe 42, and a return route 402 which is the route (flow route) of the spray matter from the supply route 401 to the tank 64. That is, in the present embodiment, between the tank 64 and the spray pipe 42, the supply route 401, which is the route on the discharge side of the spray matter, and the return route 402, which is the route on the return side of the spray matter, are provided in parallel. The supply route 401 is divided from one pump 43 into three systems along the way, leading to the spray pipes 42 of the three systems. That is, the supply route 401 is divided into a route leading to the second spray pipe 422 and the third spray pipe 423 which are included in the first system U1, a route leading to the first spray pipe 421 included in the second system U2, and a route leading to the fourth spray pipe 424 included in the third system U3. Meanwhile, the three system's return routes 402 leading to the three system's supply routes 401 merge into one and lead to the one tank 64.

The tank route 400 is provided with a water-stop drain valve 45. The water-stop drain valve 45 shuts off between the tank 64 and the pump 43, making it possible to cause the spray matter in the tank 64 to be discharged (drained) to the outside. The pump 43 is electrically connected to the control device 7, and is controlled by the control device 7 (spray process unit 75). Meanwhile, the discharge-side flowmeter 46 is provided in the supply route 401 which is the discharge side of pump 43. The discharge-side flowmeter 46 detects the flowrate of the spray matter (chemical solution) discharged from the pump 43. The discharge-side flowmeter 46 is an electromagnetic flowmeter as an example, and outputs a flowrate signal, which shows the detection result, to the control device 7 (acquisition process unit 71). Further, the pressure gauge 403 is an analog gauge as an example, and is provided in the supply route 401 which is the discharge side of the pump 43. The pressure gauge 403 is positioned between the pump 43 and the discharge-side flowmeter 46, and displays the pressure of the spray matter (pressure in the supply route 401) discharged from the pump 43.

The three valves 44 are provided for each of the systems U1, U2 and U3 of the multiple spray nozzles 41, and in the present embodiment, correspond to three systems (first system U1, second system U2, and third system U3). These multiple (three) valves 44 are individually controlled by the control device 7 (spray process unit 75) thereby to change the spray pattern. That is, the three valves 44 include a first valve 441 provided in the branch route leading to the first system U1's spray pipes 42 (422, 423) in the supply route 401, a second valve 442 provided in the branch route leading to the second system U2's spray pipe 42 (421) in the supply route 401, and a third valve 443 provided in the branch route leading to the third system U3's spray pipe 42 (424) in the supply route 401. Each of the valves 44 is a three-way solenoid valve (directional valve) that selectively connects the supply route 401, which leads to the pump 43, to the spray pipe 42 or the return route 402. Then, the first to third valves 441 to 443 are electrically connected to the control device 7, and are individually controlled by the control device 7 (spray process unit 75).

The pressure sensor 47 detects the pressure in the supply route 401 where the spray matter (chemical solution) is discharged from the pump 43. To the control device 7 (acquisition process unit 71), the pressure sensor 47 outputs a pressure signal showing the detection result. In the supply route 401, the pressure sensor 47 is positioned downstream of the discharge-side flowmeter 46 and upstream of the three valves 44. That is, the pressure sensor 47 is directly connected to a branch point of the three systems of the supply route 401, and detects the pressure of the spray matter at the above branch. Thus, it is possible to detect, with the single pressure sensor 47, the pressure in the supply route 401 branched into multiple systems (three systems in the present embodiment).

As shown in Fig. 11, a stirring device 641 that stirs the spray matter (chemical solution) in the tank 64 may be provided in the tank 64. The stirring device 641 is driven by a motor, performing the work of stirring the spray matter. This facilitates uniformity in the concentration of the spray matter, preventing a clogging of the spray nozzle 41.

According to the above configuration, the spray device 4 changes the spray pattern by controlling the first to three valves 441 to 443 when the water-stop drain valve 45 is open and the pump 43 is driven. For example, in the state where all of the first to three valves 441 to 443 connect the supply route 401 to the spray pipes 42, the spray pattern is the all-spray pattern in which the spray matter (chemical solution) is sprayed from all the spray nozzles 41. Meanwhile, in the state where only the first valve 441 out of the first to three valves 441 to 443 connects the supply route 401 to the spray pipe 42, the spray pattern is the first spray pattern in which only the six spray nozzles 41 included in the first system U1 perform the spraying. In the state where all of the first to three valves 441 to 443 connect the supply route 401 to the return route 402, the pattern is the spray-stop pattern where spraying of the spray matter (chemical solution) from all the spray nozzles 41 stops.

Here, the portion that is of the spray matter supplied from the pump 43 to the supply route 401 and that is not sprayed from the spray pipe 42 is returned through the return route 402 to the tank 64. For example, in the state where all of the first to three valves 441 to 443 connect the supply route 401 to the spray pipe 42, the rate of the spray matter returned to the tank 64 is 0 (zero). Meanwhile, in the state where only the first valve 441 out of the first to three valves 441 to 443 connect the supply route 401 to the spray pipe 42, the spray matter passing through the second and third valves 442, 443 is returned through the return route 402 to the tank 64. In the state where all of the first to three valves 441 to 443 connect the supply route 401 to return route 402, all of the spray matters supplied from the pump 43 to the supply route 401 are returned through the return route 402 to the tank 64. Thus, under a normal state, the detection result of the pressure sensor 47, i.e., the pressure at (the branch point of the three systems of) the supply route 401 is constant regardless of the spray pattern.

### [5] How to Control Spray Machine

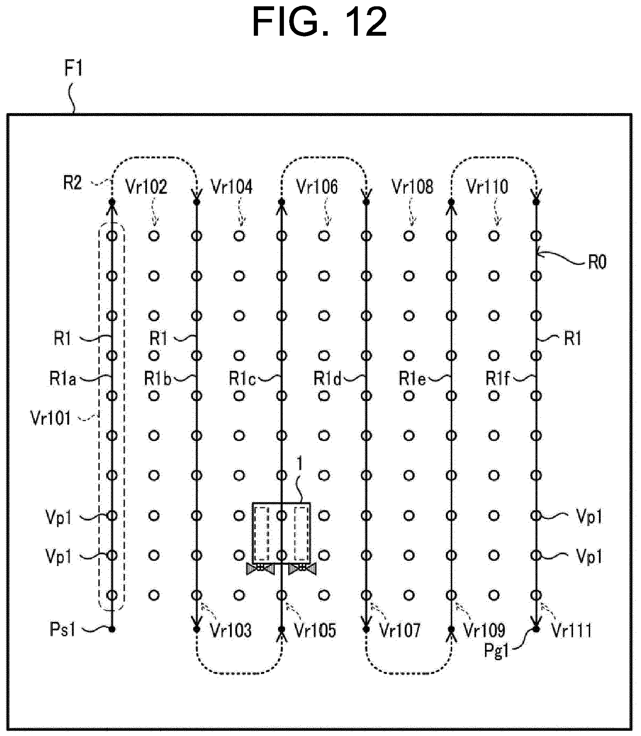

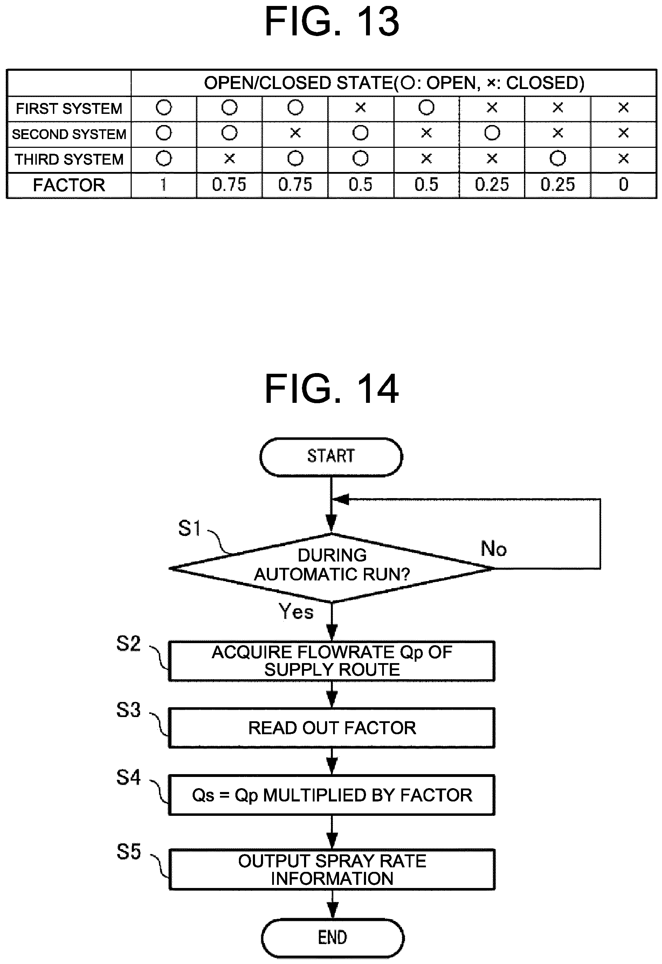

Hereinafter, an example of the work machine (spray machine 1)'s control method (hereinafter, simply referred to as a "control method") executed mainly by the control device 7 and the server 81 will be described with reference to Fig. 12 to Fig. 16. Fig. 12 is an illustration showing an example of a target route R0 for the automatic run. Fig. 14 is a flowchart showing an example of a calculation process that is of the control method according to the present embodiment and that is for acquiring especially spray rate information. However, the flowchart shown in Fig. 14 is merely one example; thus, the process may be properly added or omitted, and the order of the processes may be properly replaced.

The control method according to the present embodiment is executed by the control device 7 and the server 81 which are each mainly composed of the computer system; thus, in other words, the control method is embodied by the control program (hereinafter, simply referred to as "control program") of the work machine (spray machine 1. That is, the control program according to the present embodiment is a computer program that causes one or more processors to execute each of processes related to the control method. The above control program, for example, may be executed by the control device 7 alone or the server 81 alone, or may be executed by the user terminal 82 in cooperation with at least one of the control device 7 and the server 81.

Hereinafter, there is assumed a situation in which the spray machine 1 is caused to start automatically run while being caused to perform the spray work of the spray matter (chemical solution). However, until the automatic run's start position in the farm field F1 (automatic run start position Ps1), the operator shall manually drive the spray machine 1, for example. For example, the operator, by using a conveying vehicle, conveys the spray machine 1 from a storage (barn, etc.) to the farm field F1, then manually drives the spray machine 1 to the automatic run start position Ps1 in the farm field F1, and then causes the spray machine 1 to start automatically run.

### [5.1] General Processes Related To Automatic Run

The spray machine 1 can automatically run (autonomously run) along the target route R0 preset for the farm field F1, for example, as shown in Fig. 12. For example, from the automatic run start position Ps1 to an automatic run goal position Pg1, the spray machine 1 automatically runs along the target route R0 which includes a work route R1 (work routes R1a to R1f) and a transfer route R2. The automatic run start position Ps1 is a start of the target route R0, and is an example of the work start position of the spray work by the spray machine 1. The automatic run goal position Pg1 is an end of the target route R0, and is an example of the work end position of the spray work by the spray machine 1. The work route R1 is a straight route on which the spray machine 1 performs the spray work on the crop V1, and the transfer route R2 is a route on which the spray machine 1 moves between the crop rows Vr1 without performing the spray work. The transfer routes R2 include a turning route and a straight-forward route, for example. In the example shown in Fig. 12, the crops V1 included in crop rows Vr101 to Vr1 11 are placed in the farm field F1. In Fig. 12, a position where the crop V1 is planted (crop position) is indicated by "Vp1".

Further, the spray machine 1 automatically runs in a given row order. For example, the spray machine 1 runs over the crop row Vr101, then runs over the crop row Vr103, and then runs over the crop row Vr105. In this way, the spray machine 1 performs the automatic run according to a preset order of the crop rows Vr1. The spray machine 1 may run one row in the order in which the crop rows Vr1 are arranged, or may run every plural rows.

Specifically, the automatic run process unit 76 of the control device 7, by acquiring the automatic run start instruction (work start instruction) from the user terminal 82 while the spray machine 1 is in the automatic run start position Ps1, causes the run unit 11 to start automatically run. For example, when the operator presses the start button at the user terminal 82 after manually driving the spray machine 1 to the automatic run start position Ps1 based on the run instruction operation by the operator using a manual operation device or the like, the user terminal 82 outputs the automatic run start instruction to the spray machine 1.

When acquiring the automatic run start instruction from the user terminal 82, the automatic run process unit 76 of the control device 7 executes automatic run along the target route R0 that accords to the route data. The route data includes route information that identifies the target route R0 and work instruction information on the spray work of the spray matter (chemical solution) in each position on the target route R0. The work instruction information is, as an example, information showing the spray rate and/or spray pattern of the spray matter. The route data is generated by the server 81, and is sent from the server 81 directly or indirectly via the user terminal 82, etc., to the control device 7 of the spray machine 1. At this time, the automatic run process unit 76 stores the acquired route data in the storage unit 77. Not limited to at the server 81, the route data may be generated, for example, at the user terminal 82.

During the automatic run of the spray machine 1, the spray process unit 75 controls the spray device 4, opens at least the water-stop drain valve 45 and drives the pump 43, thereby to perform the spray work to spray the spray matter (chemical solution) from the spray nozzle 41 in a desired spray pattern. Here, the spray process unit 75 controls the spray device 4 based on the current position of the spray machine 1 so that the spray machine 1 performs the spraying when running on the work route R1 (work routes R1a to R1f) and does not perform the spraying when running on the transfer route R2. Further, depending on which of the work routes R1a to R1f the spray machine 1 is running along, the spray process unit 75 switches the spray pattern of the spray device 4 so that the spray matter (chemical solution) is sprayed to the spray target (crop V 1).

Basically, the automatic run process unit 76 and spray process unit 75 of the control device 7 execute the automatic run and the spray work until the position of the spray machine 1 matches the automatic run goal position Pg1. When the spray machine 1 reaches the automatic run goal position Pg1, the control device 7 determines that the spray machine 1 has finished its work and ends the automatic run and the spray work.

By the way, the control method according to the present embodiment is the control method of the spray machine 1 which is provided with the machine body 10 that can run and the multiple spray nozzles 41 that are supported to the machine body 10, are classified into the multiple systems U1, U2, U3, and spray the spray matter. The control method has acquiring flowrate information on the flowrate of the spray matter on at least one of the spray matter's supply route 401 from the tank 64 to the multiple spray nozzles 41 and the spray matter's return route 402 from the supply route 401 to the tank 64. Further, the control method according to the present embodiment has determining the spray rate information on the spray matter's spray rate based on the flowrate information and the open and close state of the multiple spray nozzles 41 for each of the multiple systems U1, U2, U3. Thus, the control method according to the present embodiment includes a calculation process to determine the spray matter's spray rate (spray rate information) from a multiple spray nozzles 41. Here, the control method according to the present embodiment, at least during the automatic run of the spray machine 1, executes the calculation process to acquire spray rate information. Details of the calculation process for acquiring the spray rate information are described in the column "[5.2] How to Acquire Spray Rate Information".

### [5.2] How to Acquire Spray Rate Information

Next, how to acquire the spray rate information in the control device 7 (calculation process unit 72) of the spray machine 1 is to be described. The following description assumes that there are no abnormalities such as clogging (clogging) of the spray nozzle 41 and leakage of spray matter from the spray-dedicated piping, etc.

Here, in the spray machine 1 according to the present embodiment; as a precondition, the supply route 401 which is the route on the discharge side of the spray matter, and the return route 402 which is the route on the return side of the spray matter are provided in parallel, between the tank 64 and the spray pipe 42. And, the valve 44 that selectively connects, to the spray pipe 42 or the return route 402, the supply route 401 which leads to the pump 43 is provided for each of the multiple (here three) systems U1, U2 and U3. Thus, the difference between the flowrate of the spray matter in the supply route 401 and the flowrate of the spray matter in the return route 402 is the spray matter's spray rate from the multiple spray nozzles 41. In short, a spray rate Qs is expressed as "Qs = Qp - Qr" using the spray matter's flowrate Qp in the supply route 401 and the spray matter's flowrate Qr in the return route 402.

As an example, in the "all-spray pattern" where all of the first to three valves 441 to 443 connect the supply route 401 to the spray pipe 42, the flowrate Qr in the return route 402 is 0 (zero) and the spray rate Qs matches the flowrate Qp in the supply route 401. At this time, the multiple spray nozzles 41 in the multiple systems U1, U2 and U3 are all in the "open" state capable of spraying the spray matter. Conversely, in the "stop spray pattern," in which all of the first to three valves 441 to 443 connect the supply route 401 to the return route 402, the flowrate Qr in the return route 402 matches the flowrate Qp in the supply route 401, so the spray rate Qs is 0 (zero). At this time, the multiple spray nozzles 41 of the multiple systems U1, U2 and U3 are all in a "closed" state incapable of spraying the spray matter. Meanwhile, in a spray pattern where only the valve 44 that is a part of the first to three valves 441 to 443 connects the supply route 401 to the spray pipe 42, the spray rate Qs is the difference (Qp - Qr) between the flowrate Qp in the supply route 401 and the flowrate Qr in the return route 402. At this time; of the multiple systems U1, U2 and U3, only the spray nozzle 41 of the system in which the supply route 401 is connected to the spray pipe 42 is in the "open" state capable of spraying the spray matter.

By the way, in the present embodiment, a flowmeter (discharge-side flowmeter 46) is provided only in the supply route 401 out of the supply route 401 and the return route 402. That is, there is no technique to directly detect the spray matter's flowrate Qr in the return route 402. Thus, the calculation process unit 72, by using the open and close state of the multiple spray nozzles 41 for each of the multiple systems U1, U2 and U3, can calculate the spray rate Qs without detecting the flowrate Qr in the return route 402.

Specifically, using factors illustrated in Fig. 13, based on the open and close state of the multiple spray nozzles 41 for each of the multiple systems U1, U2 and U3, the calculation process unit 72 acquires the spray rate Qs from only the flowrate Qp of the supply route 401. The open and close state of the multiple spray nozzles 41 for each of the multiple systems U1, U2, U3 is identified, for example, by a "spray pattern" controlled by the control device 7 (spray process unit 75). The factors are predetermined according to the open and close state of the multiple spray nozzles 41 for each of the multiple systems U1, U2 and U3. That is, the factors are associated one-to-one with the multiple spray patterns and are stored in storage unit 77, etc. The calculation process unit 72 calculates the spray rate Qs by multiplying the spray matter's flowrate Qp (flowrate information), which is detected by the discharge-side flowmeter 46 and which is in the supply route 401, by the factor corresponding to the then open and close state (spray pattern) of the multiple spray nozzles 41.

In the present embodiment; in the all-spray pattern, the spray rate of the spray matter sprayed from each of the spray nozzles 41 is uniform (the same) across the multiple (12 pieces) spray nozzles 41. Thus, as shown in Fig. 13, the factor corresponding to the first spray pattern in which only six spray nozzles 41 of the first system U1 are used to spray is "0.5", and the factor corresponding to the second spray pattern in which only three spray nozzles 41 of the second system U2 are used to spray is "0.25". Similarly, the factor corresponding to the third spray pattern is "0.25", the factors corresponding to the fourth and fifth spray patterns are "0.75", and the factor corresponding to the sixth spray pattern is "0.5. The factor corresponding to the all-spray pattern is "1", and the factor corresponding to the stop spray pattern is "0".

Thus, in the first spray pattern in which only the six spray nozzles 41 in the first system U1 are used to spray, for example, the calculation process unit 72 calculates the spray rate Qs (= 0.5 × Qp) by multiplying the spray matter's flowrate Qp in the supply route 401 by the factor "0.5". The spray rate Qs acquired in this way is not a value acquired by directly measuring (detecting) the spray rate, but merely an estimated value. Nevertheless, since the open and close state (spray pattern) of the multiple spray nozzles 41 for each of the multiple systems U1, U2 and U3 is accurately known, using the factor that corresponds to the open and close state makes it possible to accurately estimate (acquire) the spray rate Qs.

Thus, in the present embodiment, the spray rate information is acquired based on the flowrate information on the spray matter's flowrate Qp only in the supply route 401 out of the supply route 401 and the return route 402, and based on the open and close state of the multiple spray nozzles 41. This makes it possible to acquire the spray rate information of the spray matter without the need for providing the flowmeter in the return route 402, making it possible to simplify the configuration for acquiring the spray rate information.

The spray rate information on the spray rate Qs acquired as described above is displayed, by the output process unit 73, on a display unit, such as display 65, for example. Further, the output process unit 73 may send the spray rate information to the user terminal 82, for example, and display the spray rate information on the display unit 821 of the user terminal 82. Here, the output process unit 73 may display the spray rate information on the display unit (e.g., display 65 or display unit 821) in real time or after the end of the spray work. Thus, the control method further has displaying the spray rate information on the display unit. This makes it possible to visualize the spray matter's spray rate Qs.

In the present embodiment, the spray rate information is acquired for each position of the machine body 10 in the work area (farm field F1). That is, the control method according to the present embodiment, at least during the automatic run of the spray machine 1, executes the calculation process to acquire the spray rate information. Since the position of the machine body 10 changes from time to time during the automatic run of the spray machine 1, multiple pieces of spray rate information are required according to the change in the position. Then, to the server 81, the output process unit 73 outputs (sends) the machine body 10's position information associated with the spray rate information in that position (point). This makes it possible to acquire the spray matter's spray rate Qs in each position, even when the spray matter's spray rate Qs varies depending on the machine body 10's position within the work area (farm field F1).

To summarize the above, as shown in Fig. 14, the control device 7 triggers that the spray machine 1 is automatically running (S1: Yes), and starts the process related to the calculation process (process to acquire the spray rate information) from step S2 onward. Here, when receiving the automatic run start instruction from the user terminal 82 or the like while the spray machine 1 is in the automatic run start position Ps1, the control device 7 determines that the spray machine 1 is automatically running (S1: Yes), and moves the process to step S2. Meanwhile, when not receiving the automatic run start instruction from the user terminal 82 or the like, or after the spray machine 1 reaching the automatic run goal position Pg1, the control device 7 determines that the spray machine 1 is not automatically running (S 1: No).

In step S2; from the discharge-side flowmeter 46, the acquisition process unit 71 of the control device 7 acquires flowrate information on the spray matter's flowrate Qp in the supply route 401. In step S3, the calculation process unit 72 of the control device 7 reads out the factor that corresponds to the then open and close state (spray pattern) of the multiple spray nozzles 41 for each of the multiple systems U1, U2, U3. In step S4, the calculation process unit 72 of the control device 7 multiplies the flowrate Qp by the factor thereby to acquire the spray rate information on the spray matter's spray rate Qs.

In step S5, the output process unit 73 of the control device 7 outputs the spray rate information on the spray rate Qs acquired as described above. At this time, the spray rate information is displayed on the display unit (e.g., display 65 or display unit 821) in real time. Further, the spray rate information in a state of being associated with the machine body 10's position information is output (sent) to the server 81.

Step S5 ends the series of processes related to the calculation process. The control device 7 repeatedly executes the processes in step S1 to step S5. Thus, as long as the automatic run is ongoing (S1: Yes), the above processes related to the calculation process are executed.

### [5.3] Work Map

Next, the work map M1 created by the server 81 (map creation unit 813) is described with reference to Figs. 15 and 16.

As described above, the work map M1 has a multiple zones K, and corresponds to the farm field F1 (work area). Each of the multiple zones K is assigned a work index that shows the spray matter's spray rate. The work map M1 that is used for the spray work and that defines the spray matter's spray rate as work index for each zone K is referred to as "spray map" also.

Here, as an example, it is assumed that the spray rate as work index is the spray rate of the spray matter (chemical solution) sprayed per unit area. That is, the spray rate as work index is not the total spray rate (chemical solution) sprayed to each zone K, but the spray matter's average spray rate (mean) in each zone K. As an example, when the unit area is "10a" and the spray matter (chemical solution)'s spray rate is expressed in terms of liquid volume (ml), the unit of spray rate as work index is "ml/10a". However, it is sufficient that the work index should be a representative value for each zone K, and thus is not limited to an average value such as the spray rate per unit area, but may be a representative value such as total, median, mode, maximum, or minimum value in each zone K. As an example, the spray rate as work index may be the total amount (total value), etc. of the spray matter (chemical solution) sprayed to each zone K.

More specifically, the multiple zones K in the work map M1 are set not for the farm field F1 (work area) itself in real space, but for a target area TA1 that corresponds to the farm field F1. The work map M1 is data that assigns a work index, such as the spray rate, to each of the multiple zones K set in the target area TA1 in this way. The "target area" in the present disclosure is a two-dimensional area set in virtual space corresponding to the farm field F1, and is used to create the work map M1. That is, the target area TA1 is the area that is set in virtual space for the creation of the work map M1, corresponding to the farm field F1 present in real space.

Thus, "zone" in the present disclosure means an individual area that is seen when the target area TA1 in the virtual space is divided into multiple areas and that is in the virtual space after the dividing. Each of the multiple zones K is an area of a predetermined shape, such as a square, for example. The control method according to the present embodiment sets the target area TA1 in the virtual space, then sets the multiple zones K in the target area TA1, and further assigns (maps) the work index (spray rate) to the multiple zones K, thereby to create the work map M1.

As an example, dividing the entire target area TA1 into multiple zones K in a mesh-like pattern and assigning the work index to each zone K create the work map M1, as shown in Fig. 15. Fig. 15 schematically shows a state of the target area TA1 divided into multiple zones K. For example, each of the zones K is a square area of 5 m × 5 m in terms of actual size in the corresponding farm field F1. However, the shape and size of each of the zones K is not limited. On the left side in Fig. 15, the X-coordinate (X-axis) and Y-coordinate (Y-axis) information (zone number) is attached as identification information for each zone K.

More specifically, the work map M1 is map data that includes information such as the corresponding "zone number" and "work index" for each zone K in the target area TA1. The zone number is identification information of the zone K. This means that the work index (spray rate) is to be registered for each zone K. The above work map M1 is displayed at the user terminal 82, for example, thereby to be visualized as shown on the right side in Fig. 15 as an example. In the example in Fig. 15; the work map M1 employs a mode where, for example, multi-tone gray shading (gray scale) or each color is associated with the work index. In this example; for each zone K, a lighter color indicates less spray rate and a darker color indicates more spray rate. Increasing the number of zones K in the target area TA1 (number of divisions) makes the work map M1 more detailed. Each zone K of the work map M1 may or may not be displayed with a "numerical value" of the work index.

The above work map M1, by showing the work index's distribution in the target area TA1, shows the distribution of the spray matter (chemical solution)'s spray rate in the entire farm field F1 that corresponds to this target area TA1. Thus, presenting the work map M1 to the user makes it possible to present, to the user, the distribution of the spray matter (chemical solution)'s spray rate for the actual farm field F1 in a manner to be reflected on the work map M1.

In the present embodiment, the spray rate information acquired by the calculation process unit 72 is acquired for each machine body 10's position in the farm field F1 (work area). Then, to the server 81, the output process unit 73 of the spray machine 1 outputs (sends) the machine body 10's position information acquired by the acquisition process unit 71 associated with the spray rate information in that position (point). Thus, the map creation unit 813 of the server 81 creates the work map M1 based on the machine body 10's position information and the spray rate information in that position (point). That is, the control method according to the present embodiment further has creating, based on the spray rate information, the work map M1 that has the multiple zones K setting the spray rate respectively and that corresponds to the work area (farm field F1). This makes it possible to relatively easily create the work map M1 by using the spray rate information acquired by the calculation process unit 72.

The work map M1 thus created by the map creation unit 813 of the server 81 is displayed by the presentation process unit 814 of the server 81 on the display unit 821 of the user terminal 82, for example. That is, the presentation process unit 814, as shown in Fig. 16, creates the display image Im1 including the work map M1, and displays the display image Im1 on the display unit 821 of the user terminal 82, for example. In the example in Fig. 16; side by side (in the horizontal direction), the display image Im1 displays the created work map M1 and a reference map M2 which is compared to the work map M1. This allows the user to check, on the display image Im1, the reference map M2 together with the work map M1. This makes it easier for the user to evaluate the work map M1.

The reference map M2 is a map that corresponds to the farm field F1 (work area) same as the work map M1 and that has multiple zones K, including, for example, various maps, such as a growth map, a yield map, an eating quality map or a soil map. The growth map is map data in which the crop growth state for each area is assigned to each area when the farm field F1 is divided into multiple areas. As an example, the growth state of a crop is acquired by taking, from the sky using a drone, etc., images of the farm field F1 planted with a crop, and analyzing the taken images by various vegetation indices, such as NDVI, DVI, RVI, GNDVI, SAVI, TSAVI, CAI, MTCI, REP, PRI, or RSI. In particular, the growth map acquired by the NDVI (Normalized Difference Vegetation Index) is referred to as "NDVI map" also. The yield map is map data in which yields for each area (e.g., average yield per unit area) are assigned to each area when the farm field F1 is divided into multiple areas. The taste map is map data in which each area is assigned a taste (or acidity), such as protein content or moisture content, when the farm field F1 is divided into multiple areas. The soil map is map data in which soil properties, including soil hardness and hardpan depth for each area, are assigned to each area when the farm field F1 is divided into multiple areas.

As an example in Fig. 16, the NDVI map as one of the growth maps is displayed on the display image Im1 as a reference map M2. However, the map displayed as the reference map M2 can be selected as needed; for example, various maps other than the NDVI map, such as the growth map, yield map, eating quality map, or soil map, can be displayed on the display image Im1 as the reference map M2. Presenting (displaying) the above display image Im1 makes it possible for the user to compare the work map M1 (spray map) with the reference map M2 and thereby to see, for example, the relation between the spray matter (chemical solution)'s spray rate and the growth state, etc. of the crop V1. Further, multiple types of reference maps M2 may be presented on the display image Im1 in a mode comparable to the work map M1.

It is not essential that the work map M1 should be presented in the mode comparable to the reference map M2. That is, even when being presented alone, the work map M1 can be used, for example, as part of a daily work report as a record of the work, or as proof of the details of the spray work (spray date, spray position, spray rate, etc.).

By the way, the calculation process unit 72, by additionally taking into account the spray direction of the spray matter, may acquire the spray rate information. That is, in the present embodiment; among the multiple (12 pieces) spray nozzles 41, the six spray nozzles 41 provided in the spray pipe 42 of the first system U1 spray the spray matter toward the crop V1 positioned in the space Sp1 inside the machine body 10. Among the multiple spray nozzles 41, the three spray nozzles 41 provided in the spray pipe 42 of the second system U2 spray the spray matter toward the crop V1 positioned on the outer left side of the machine body 10. Among the multiple spray nozzles 41, the three spray nozzles 41 provided in the spray pipe 42 of the third system U3 spray the spray matter toward the crop V1 positioned on the outer right side of the machine body 10. Thus, the open and close state (spray pattern) of the multiple spray nozzles 41 for each of the multiple systems U1, U2 and U3 makes it possible to identify in which direction, as seen from the machine body 10, the spray matter is sprayed.

Thus, for each position of the machine body 10, the calculation process unit 72 can acquire, in addition to the spray matter's spray rate Qs, in which direction the spray matter was sprayed. In this case, the work map M1, by adding the spray direction of the spray matter also, can show the more accurate spray rate Qs.

### [6] Modified Examples

A description will hereinafter be made on modified examples of the first embodiment. The modified examples, which will be described below, can be applied in proper combination.

The control device 7 and the server 81 according to the present disclosure includes the computer system. The computer system has, as hardware, one or more processors and one or more storages. The processor, by executing the program recorded in the storage of the computer system, realizes the function as the control device 7 and the server 81 in the present disclosure. The program may be preliminarily recorded in the storage of the computer system, may be provided through an electric communication line, or may be provided in a manner to be recorded in a non-transitory recording medium, such as a memory card, an optical disk, a hard disk drive, or the like, each of which is readable by the computer system. Further, part of or all of the functional units included in the control device 7 may be composed of an electronic circuit.

Further, collecting at least part of the functions of each of the control device 7 and the server 81 in one housing is not an essential configuration for the control device 7 and the server 81; the components of each of the control device 7 and the server 81 may be provided in multiple housings in a distributed manner. Conversely, in the control device 7 and the server 81, functions that are distributed in multiple devices may be collected in a single housing. Further, at least part of the functions of the control device 7 may be realized by a cloud (cloud computing) or the like.

Not limited to for orchards such as vineyards or apple orchards, the spray machine 1 may also be used for works in other farm field F1 or work target area other than the farm field F1. Further, the spray matter sprayed by the spray machine 1 is not limited to the chemical solution, but can also be water, fertilizer, disinfectant solution or other liquids, or powders or the like, for example. Similarly, the spray targets to which the spray matter is sprayed are not limited to grape trees, but may also be other crops or objects other than crops (including an inorganic matter). Further, the spray machine 1 is not limited to an unmanned machine that is actuated by an automatic drive, but the spray machine 1 can also be configured to be actuated by an operation (including remote operation) of a human (operator) or can be a passenger type (manned machine) on which the operator can board, for example. In this case, too, the antenna 21 or the like is provided on the spray machine 1 so as to grasp the current position of the spray machine 1.

The creation of the work map M1 may be performed by an information process device (including a server device, etc.) different from the automatic run control server 81 which sends, to the spray machine 1, information such as the target route for automatic run of the spray machine 1. Further, the process of acquiring the spray rate information may also be executed not by the control device 7 of the spray machine 1, but by the server 81 that can communicate with the spray machine 1, or by another information process device (including a server device, etc.) different from the server 81. In this case, the flowrate information and the open and close state (open/closed information) are sent from the spray machine 1 to the information process device.

The flowrate of the spray matter (chemical solution) discharged from the pump 43, i.e., the spray matter's flowrate Qp in the supply route 401, may be acquired from the output of a rotation sensor that detects the speed of the motor for driving the pump 43, for example, instead of from the discharge-side flowmeter 46. That is, using the speed N [rpm] of the motor for driving the pump 43, the capacity q [cc/rev] of the pump 43, and the volumetric efficiency ηv expresses the spray matter's flowrate Qp in the supply route 401 as "Qp = q × N × ηv/1000". Since the capacity q and volumetric efficiency ηv of the pump 43 are known, the spray matter's flowrate Qp in the supply route 401 can be acquired based on the speed N that is detected by the rotation sensor and that is of the motor for driving the pump 43. The flowrate Qp thus acquired can be used in place of the flowrate Qp detected by the discharge-side flowmeter 46, thereby to make it possible to acquire the spray rate information. In this case, the discharge-side flowmeter 46 can be omitted.

Further, it is sufficient that the support frame 3 should be mounted to one end portion of the machine body 10 in the front/back direction D3, and the support frame 3 may be mounted to the front of the machine body 10. In this case, the work unit (spray nozzle 41) supported to the support frame 3 is also placed on the front of the machine body 10, not on the rear thereof.

Further, the spray machine 1 may be provided with a pair of spray devices 4 arranged in the front/back direction D3. As a result, the spray machine 1 can perform the work (spray work) by each of the pair of spray devices 4 arranged in the front/back direction D3, making it possible to improve the work efficiency as compared with the case where the work is performed only by any one of the spray devices 4. The spray machine 1 may further include a rotating/driving device that generates rotary power to rotate the support frame 3 around the rotation axis Ax1 relative to the machine body 10.

Further, it is sufficient that the machine body 10 should have the first block 10L and the second block 10R arranged in the right and left direction D2, and right and left of the first block 10L and the second block 10R may be reversed. That is, it may be so configured that the first block 10L on which the power source 63 and the like are provided is positioned on the right side, while the second block 10R on which the user interface 61 and the like are provided is positioned on the left side.

Further, the run unit 11 is not limited to the crawler-type run device, but may have one or a multiplicity of wheels and be so configured as to run by rotation of the wheels, for example. Further, the run unit 11 is not limited to be so configured as to be driven by the hydraulic motor, but may also be so configured as to be driven by an electric motor, for example.

Further, the spray machine 1 is not limited to of the air-assist type spray machine as in the first embodiment, but may also be of an electrostatic spraying type, or of a type combining the air-assist type with the electrostatic spraying type. In the case of the electrostatic spraying type spray machine 1, the airflow generation unit 5 can be omitted.

Further, the power source 63, not limited to the engine, may have a motor (electric motor), for example, or may be a hybrid power source including the engine and the motor.

Further, the spray machine 1 may be in such a mode that the machine body 10 does not have the gate-shape, but the entire machine body 10 runs between the pair of adjacent crop rows Vr1 (work route). In this case, the spray machine 1 runs on each work route without straddling the crop row Vr1. In this case, the spray device 4 performs the spray work by switching among a spray pattern in which the chemical solution is sprayed to both in the right and left directions D2, a spray pattern in which the chemical solution is sprayed only to the left, and a spray pattern in which the chemical solution is sprayed only to the right.

Further, the antennas 21, 22 are not limited to the position identifying antennas, but may be wireless communication antennas, for example. Further, the antennas 21 and 22 are not limited to those for receiving, but may be those for sending or for receiving and sending.

Further, the user interface 61, in addition to or instead of the display unit 611, may have means for presenting information to the user by sound output or the like, for example. Further, at least one of the adjustment items (flow rate or pressure and the like) may be automatically adjusted by the control device 7 by using the operation unit 612 of the user interface 61. In this case, the operation unit 612 can be omitted as appropriate, and the user interface 61 may only display the adjustment results on the display unit 611.

### (Second Embodiment)

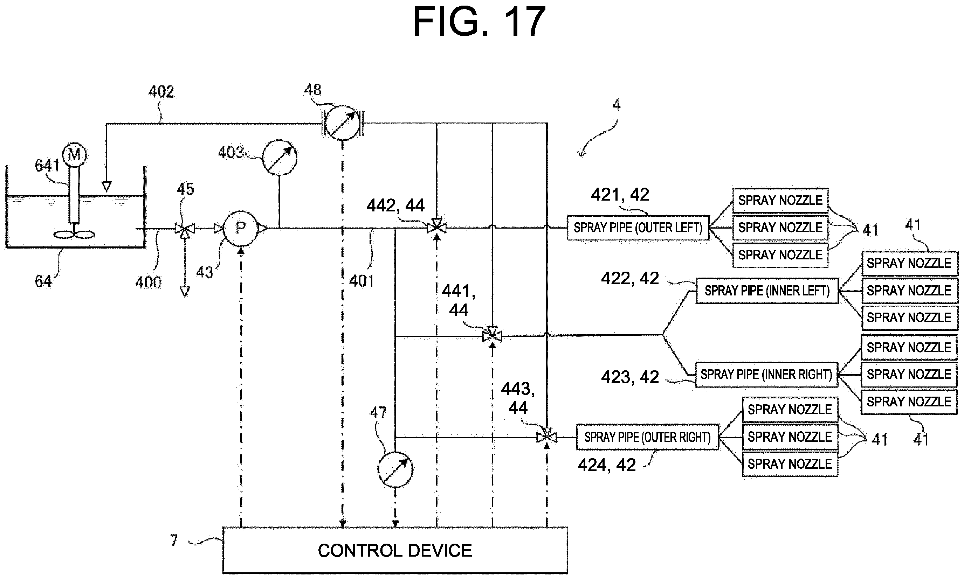

The spray machine 1 according to the present embodiment, in a point that the spray device 4 has a return-side flowmeter 48, is different from the spray machine 1 according to the first embodiment, as shown in Fig. 17. Hereinafter, the configurations same as those in the first embodiment will be denoted by the same reference signs, and the description thereof will be properly omitted.

The return-side flowmeter 48 detects the flowrate of the spray matter (chemical solution) returning through the return route 402 to the tank 64. The return-side flowmeter 48 is an electromagnetic flowmeter as an example, and outputs, to the control device 7 (acquisition process unit 71), a flowrate signal showing the detection result. Here, in the present embodiment, the discharge-side flowmeter 46 (see Fig. 11) in the supply route 401 is omitted.

Thus, in the present embodiment, the flowmeter (return-side flowmeter 48) is provided only in the return route 402 out of the supply route 401 and the return route 402. That is, there is no technique to directly detect the spray matter's flowrate Qp in the supply route 401. Thus, using the open and close state of multiple spray nozzles 41 for each of the multiple systems U1, U2 and U3, the calculation process unit 72 can calculate the spray rate Qs without detecting the flowrate Qp in the supply route 401.

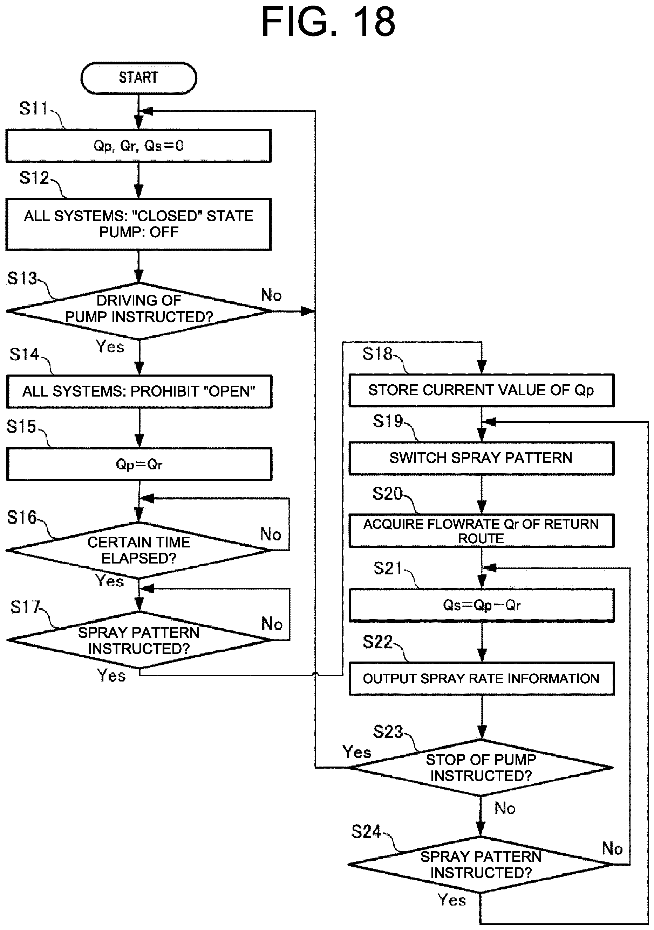

In short, in the spray machine 1 according to the present embodiment; the calculation process unit 72 acquires the spray rate Qs from only the flowrate Qr in the return route 402, based on the open and close state of the multiple spray nozzles 41 for each of the multiple systems U1, U2, U3. Specifically, the control device 7 acquires the spray matter's spray rate Qs according to the flowchart shown in Fig. 18.

First, in step S11; to 0 (zero), the calculation process unit 72 of the control device 7 resets all of the spray matter's flowrate Qp in the supply route 401, the spray matter's flowrate Qr in the return route 402, and the spray matter's spray rate Qs. In next step S12; the spray process unit 75 of the control device 7 sets the "spraying stop pattern" in which all of the supply routes 401 of the multiple systems U1, U2, U3 are connected to the return route 402, and turns off (stop) the pump 43.

In step S13, the control device 7 determines whether or not an instruction to drive the pump 43 was given. For starting the spray work of the spray matter, the spray process unit 75 of the control device 7 issues the instruction to drive the pump 43, thereby to drive the pump 43. When the instruction to drive the pump 43 (S13: Yes) is given, the control device 7 moves the process to step S14. Meanwhile, when is no instruction to drive the pump 43 (S13: No) is given, the control device 7 returns the process to step S11.

In step S14, the spray process unit 75 of the control device 7 maintains the supply route 401 being connected to the return route 402 for all of the multiple systems U1, U2, U3, thereby to prohibit the spray nozzle 41 from being "open". In next step S15, the acquisition process unit 71 of the control device 7, from the return-side flowmeter 48, acquires flowrate information on the spray matter's flowrate Qr in the return route 402, and substitutes the flowrate Qr for the spray matter's flowrate Qp in the supply route 401.

In step S16, the control device 7 determines whether or not a certain time has elapsed. When the certain time has elapsed (S16: Yes), the control device 7 moves the process to step S17. Meanwhile, when the certain time has not elapsed (S16: No), the control device 7 repeats step S16.

In next step S17, the control device 7 determines whether or not an instruction of the spray pattern has been given. For starting the spray work of the spray matter, the spray process unit 75 of the control device 7 issues the instruction of the spray pattern, thereby to control the valve 44. When the spray pattern is instructed (S17: Yes), the control device 7 moves the process to step S18. Meanwhile, when there is no instruction of the spray pattern (S17: No), the control device 7 repeats step S17.

In step S18, the calculation process unit 72 of the control device 7 transitorily stores the current value of the flowrate Qp in the storage unit 77, etc. That is, since the flowrate Qr acquired from the return-side flowmeter 48 is substituted for the flowrate Qp in step S15, the flowrate Qr detected at the return-side flowmeter 48 at this time point is transitorily stored as the spray matter's flowrate Qp in the supply route 401. In next step S19, the spray process unit 75 of the control device 7 controls valve 44 according to the spray pattern instruction to switch the spray pattern.

In step S20, the acquisition process unit 71 of the control device 7 acquires flowrate information on the spray matter's flowrate Qr in the return route 402 from the return-side flowmeter 48. In step S21, the calculation process unit 72 of the control device 7 acquires the spray rate information on the spray matter's spray rate Qs by subtracting the flowrate Qr (acquired in step S20) from the transitorily stored flowrate Qp (in step S18).

In step S22, the output process unit 73 of the control device 7 outputs the spray rate information on the spray rate Qs acquired as described above. At this time, the spray rate information is displayed on the display unit (e.g., display 65 or display unit 821) in real time. Further, the spray rate information in a state of being associated with the machine body 10's position information is output (sent) to the server 81.

In next step S23, the control device 7 determines whether or not the pump 43 has been instructed to stop. For ending the spray work, the spray process unit 75 of the control device 7 issues an instruction to stop the pump 43, thereby to stop the pump 43. When the pump 43 is instructed to stop (S23: Yes), the control device 7 returns the process to step S11. Meanwhile, when there is no instruction to stop the pump 43 (S23: No), the control device 7 moves the process to step S24.

In step S24, the control device 7 determines whether a spray pattern instruction has been received. When changing (switching) the spray pattern, the spray process unit 75 of the control device 7 controls the 44 valves by issuing a spray pattern instruction. When the spray pattern is indicated (S24: Yes), the control device 7 moves the process to step S19. Meanwhile, when there is no indication of a spray pattern (S24: No), the control device 7 moves the process to step S21.

The control device 7 repeatedly executes the processes in step S11 to step S24. However, the flowchart shown in Fig. 18 is merely one example; thus, the process may be properly added or omitted, and the order of the processes may be properly replaced.

As described above, in the present embodiment, the spray rate information is acquired based on the flowrate information on the spray matter's flowrate Qr only in the return route 402 out of the supply route 401 and return route 402, and on the open and close state of the multiple spray nozzles 41. This makes it possible to acquire information on the spray matter's spray rate without a flowmeter provided in the supply route 401, thereby making it possible to simplify the configuration for acquiring information on the spray matter's spray rate.

As a modified example of the second embodiment, the discharge-side flowmeter 46 (see Fig. 11) of the supply route 401 may be provided in addition to the return-side flowmeter 48. In this case, the calculation process unit 72 takes the difference (Qp - Qr) between the flowrate Qp in the supply route 401 detected by the discharge-side flowmeter 46 and the flowrate Qr in the return route 402 detected by the return-side flowmeter 48, thereby to make it possible to more accurately acquire the spray matter's spray rate Qs. The configuration (including the modified example) according to the second embodiment can be adopted in proper combination with the various configurations (including the modified examples) described in the first embodiment.

### (Appendices to Invention)

Appended below is a summary of the invention extracted from the embodiments described above. The components and processing functions described in the appendices below may be selected and optionally combined.

### <Appendix 1>

A control method of a spray machine provided with a machine body capable of running and multiple spray nozzles supported to the machine body and classified into multiple systems for spraying a spray matter, the method including: acquiring flowrate information on a flowrate of the spray matter in at least one of a supply route of the spray matter from a tank to the multiple spray nozzles and a return route of the spray matter from the supply route to the tank; and acquiring spray rate information on a spray rate of the spray matter, based on the flowrate information and based on an open and close state of the multiple spray nozzles for each of the multiple systems.

### <Appendix 2>

The control method of the spray machine as described in appendix 1, further including: displaying the spray rate information on a display unit.

<Appendix 3>

The control method of the spray machine described in appendix 1 or 2, wherein the spray rate information is acquired for each position of the machine body in a work area.

### <Appendix 4>

The control method of the spray machine described in appendix 3, further including: creating, based on the spray rate information, a work map corresponding to the work area, the work map having multiple zones each having, set thereto, a spray rate.

### <Appendix 5>

The control method of the spray machine described in any of appendices 1 to 4, wherein the spray rate information is acquired based on the flowrate information on the flowrate of the spray matter only in the supply route out of the supply route and the return route, and based on the open and close state of the multiple spray nozzles.

### <Appendix 6>

The control method of the spray machine described in any of appendices 1 to 4, wherein the spray rate information is acquired based on the flowrate information on the flowrate of the spray matter only in the return route out of the supply route and the return route, and based on the open and close state of the multiple spray nozzles.

### <Appendix 7>

The control method of the spray machine described in any of appendices 1 to 6, wherein the multiple systems each include a spray pipe that extends along an up and down direction and that supplies the spray matter to one or more of the multiple spray nozzles.

### <Appendix 8>

A spray machine control program for causing one or more processors to execute the control method of the spray machine described in any of appendices 1 to 7.

### REFERENCE SIGNS LIST

1 spray machine
10 machine body
41 spray nozzle
42 spray pipe
71 acquisition process unit
72 calculation process unit
64 tank
65 display (display unit)
401 supply route
402 return route
821 display unit
D1 up and down direction
F1 farm field (work area)
K zone
M1 work map
U1, U2, U3 system

## Claims

1. A control method of a spray machine provided with a machine body capable of running and multiple spray nozzles supported to the machine body and classified into multiple systems for spraying a spray matter, the method comprising:
acquiring flowrate information on a flowrate of the spray matter in at least one of a supply route of the spray matter from a tank to the multiple spray nozzles and a return route of the spray matter from the supply route to the tank; and
acquiring spray rate information on a spray rate of the spray matter, based on the flowrate information and based on an open and close state of the multiple spray nozzles for each of the multiple systems.

2. The control method of the spray machine as claimed in claim 1, further comprising:
displaying the spray rate information on a display unit.

3. The control method of the spray machine as claimed in claim 1 or 2, wherein
the spray rate information is acquired for each position of the machine body in a work area.

4. The control method of the spray machine as claimed in claim 3, further comprising:
creating, based on the spray rate information, a work map corresponding to the work area, the work map having multiple zones each having, set thereto, a spray rate.

5. The control method of the spray machine as claimed in claim 1 or 2, wherein
the spray rate information is acquired based on the flowrate information on the flowrate of the spray matter only in the supply route out of the supply route and the return route, and based on the open and close state of the multiple spray nozzles.

6. The control method of the spray machine as claimed in in claim 1 or 2, wherein
the spray rate information is acquired based on the flowrate information on the flowrate of the spray matter only in the return route out of the supply route and the return route, and based on the open and close state of the multiple spray nozzles.

7. The control method of the spray machine as claimed in in claim 1 or 2, wherein
the multiple systems each include a spray pipe that extends along an up and down direction and that supplies the spray matter to one or more of the multiple spray nozzles.

8. A spray machine control program for causing one or more processors to execute the control method of the spray machine as claimed in claim 1 or 2.

9. A spray machine comprising:
a machine body capable of running;
multiple spray nozzles supported to the machine body and classified into multiple systems for spraying a spray matter;
an acquisition process unit that acquires flowrate information on a flowrate of the spray matter in at least one of a supply route of the spray matter from a tank to the multiple spray nozzles and a return route of the spray matter from the supply route to the tank; and
a calculation process unit that acquires spray rate information on a spray rate of the spray matter, based on the flowrate information and based on an open and close state of the multiple spray nozzles for each of the multiple systems.
